Europäisches Patentamt

European Patent Office

Office européen des brevets

(11) Publication number: **0 304 089 B1**

# EUROPEAN PATENT SPECIFICATION

(45) Date of publication of patent specification: **19.11.92**  (51) Int. Cl.5: **B60K 41/00**, F02D 41/26

(21) Application number: **88113527.1**

(22) Date of filing: **19.08.88**

(54) Electronic engine control apparatus.

(30) Priority: **19.08.87 JP 204006/87**
**28.10.87 JP 270202/87**

(43) Date of publication of application:
**22.02.89 Bulletin 89/08**

(45) Publication of the grant of the patent:
**19.11.92 Bulletin 92/47**

(84) Designated Contracting States:
**DE GB**

(56) References cited:
EP-A- 0 059 586
EP-A- 0 144 608
DE-A- 3 715 423
GB-A- 2 047 361
GB-A- 2 151 049

IEEE Transactions on Systems, Man, and Cybernetics, Vol. SMC-3, No. 1, Jan. 1973, pages 28 to 44.

(73) Proprietor: **HITACHI, LTD.**
**6, Kanda Surugadai 4-chome**
**Chiyoda-ku, Tokyo 100(JP)**

(72) Inventor: **Onari, Mikihiko**
**23-12, Honda-3-chome**
**Kokubunji-shi(JP)**
Inventor: **Funabashi, Motohisa**
**6-4-505, Araisono-4-chome**
**Sagamihara-shi(JP)**
Inventor: **Sekozawa, Teruji**
**1-2-1009, Hakusan-4-chome**
**Asao-ku Kawasaki-shi(JP)**
Inventor: **Shioya, Makoto**
**9-9, Naritahigashi-2-chome**
**Suginami-ku Tokyo(JP)**

(74) Representative: **Strehl, Schübel-Hopf, Groening**
**Maximilianstrasse 54 Postfach 22 14 55**
**W-8000 München 22(DE)**

**Description**

The present invention relates to an electronic engine control apparatus, and more particulary to an electronic engine control apparatus whereby the driving characteristics of a vehicle are adjusted so as to match a driver's intent of how to drive it, namely the driving characteristics are adjusted in accordance with a driving environment of a vehicle and/or a driver's preference to the way how he or she drives it.

Conventional engine control electronic apparatus of commercial vehicles have the engine control characteristics adjusted to match the driving characteristics which are most preferred by vehicle users (drivers and fellow persons) under the driving (running) environments most frequently come across. A so-called greatest common divisor type matching has been adopted for the engine control characteristics. The term "matching" herein means adjusting an engine control unit so as to meet the requirements of a vehicle driver.

In a known engine control apparatus for electronically controlling a throttle valve, there is also adopted a method of electronically controlling the sensitivity of opening a throttle valve relative to an amount of accelerator pedal depression in accordance with the accelerator pedal depression amount and speed, as disclosed in, e.g., US-A 4,597,049.

For the conventional electronic engine control, however, a method has been adopted whereby the control is conducted based on the engine conditions during several engine strokes. In other words, the main function of such engine control is to control the engine in accordance with the measured results obtained for a short period. Thus, the engine control apparatus is not equipped with a unit for discriminating driving environments and drivers preferences (feelings) in accordance with the measured results obtained for a long period of several tens to hundreds engine strokes. Such a long measuring period for discrimination is herein defined as an evaluation period.

The above-mentioned greatest common divisor type matching does not meet all driving environments and various driver's preferences (feelings). Also, the above-mentioned method, whereby a change in the sensitivity of opening a throttle valve relative to an amount of acceleration pedal depression in accordance with only the accelerator pedal motion (accelerator pedal depression amount and speed) is effected, as in the case of the above-described US Patent, however, poses a problem that a sensitivity change is also effected upon racing or double-clutch.

From EP-A 144 608 is known an electronic clutch and transmission control apparatus for a vehicle, comprising:

an accelerator pedal sensor for detecting the action of a driver of the vehicle;

second sensors for detecting the operating condition of the vehicle;

a plurality of actuators controlling the clutch and the transmission; and

means for controlling the clutch and the transmission by adjusting the actuators in response to the signals of said sensors,

wherein said controlling means comprises means discriminating the driver's intent of how to drive the vehicle on the basis of the output signal of said accelerator pedal.

It is an object of the present invention to solve dissatisfied driveability of vehicle users and provide an engine control apparatus which is arranged to adjust or change the driving characteristics in accordance with the driver's intent of how to drive a vehicle, i.e., in accordance with the driving environment and/or driver's preference.

The above object is achieved by the features defined in claim 1, i.e. inter alia by measuring the driver action for a predetermined period with the aid of a computer built in the engine control apparatus, discriminating and categorizing the driving environments and/or the driver's preferences based on the measured results, and by causing the engine control characteristics to match the driving environments and/or the driver's preferences in accordance with the categorized results. To this end, the driving conditions of a vehicle and the driver's action are measured a plurality of times for a period longer than several cycles, and the measured results are calculated and processed.

Generally, a vehicle is driven by a driver in accordance with the driver's intent of how to drive it under a given driving environment, the driver's preference being included in such an intent. On the other hand, the driving conditions of a vehicle reflect the driving environment and driver's preference. In consideration of these points, according to the present invention, the category of environments and preferences under different driving conditions is identified to thus determine the control parameters in conformity with the identified category. The measuring variables for discriminating the driver's intent, i.e., driving environments (i.e., running environments) and/or driver's preferences, include accelerator pedal position (angle) and depression speed, vehicle velocity, engine speed (revolution number of engine per unit time), acceleration rate, gear position (manual transmission (MT) vehicle), shift operation, steering speed, break occurrence

EP 0 304 089 B1

frequency and the like.

Included in these measuring variables are the preferences or feelings of a driver as to how to drive it in a given driving environment.

The qualitative and empirical analysis on the influence of driving environments and driver's preferences upon the measuring parameters presented the results as shown in Figs. IA and IB. The "driving conditions" are herein used to define the state where a driver drives a vehicle in a given driving environment in accordance with his or her preference.

Therefore, the driving conditions represent the driving environment, the driver's preference, or the combination thereof as the case may be. Thus, as the candidates for the driving condition variables to be described later, variables representative of the driving environments and variables representative of the driver's preferences are used.

According to the present invention, in order to categorize the driving conditions in accordance with the analyzed results, membership functions of the Fuzzy theory for example are used with respect to the measuring variables. A membership function which is used in the Fuzzy theory expresses the degree of participation of an element (variable) to a concept by a numeral value of 0 to 1.

Each of the measured variables during a predetermined period (evaluation period) is classified into three types, e.g., large, middle and small by using membership functions, and the occurrence frequencies of respective types are counted. With this method, the driving conditions and the driver actions during the evaluation period can be statistically recognized. The results give basic data, based on which the driving conditions such as the driving environments and the driver's preferences are discriminated.

The occurrence frequency of each measuring variable is converted into a driving condition through conversion matrix calculation, so that the occurrence probability of each driving condition can be obtained. If the maximum occurrence probability of a driving condition excesses a standard level, this maximum occurrence probability can be used as an estimated value of the driving condition during the evaluation period.

The conversion matrix values for calculating the driving condition from the occurrence frequency data are beforehand set with the occurrence probabilities of each driving condition corresponding to the large, middle and small frequencies of each measuring variable. As the conversion matrix values, occurrence probability values may be set, 1 or 0 may be set depending upon whether the measuring variable contributes to estimating the driving condition, or weighted values may be used for those measuring variables which contribute more to estimate the driving conditions than the other measuring variables or classification types.

Desired conversion matrix values enable to positively utilize the characteristics of respective measuring variables and discriminate the driving conditions. In addition, by adding the estimated value of a driving condition obtained for each measuring variable to a proper measuring variable, the driving condition can be discriminated more accurately.

After identifying a driving condition, a corresponding control method is selected to change engine control parameters. Ignition timings, amount of injected fuel and the like are chosen as the control parameters.

Apart from the above, according to the studied and categorized results, the driver's intents/preferences include three modes: (1) Sporty, (2) Normal and (3) Gentle. There is a tendency that where a vehicle matched to the average preference is used, a driver with "Sporty" preference more abruptly depresses the accelerator pedal and brake pedal than a driver with "Normal" preference, and a driver with "Gentle" preference more gently depresses them.

Such tendency is not always present, but may change with the road conditions and the fellow persons. Even if the driver's intent/preference are expressed indefinitely at a time, by time sequentially measuring and evaluating the motions of accelerator pedal and brake pedal which are likely to show the driver's intent/preference during the driving, it become possible to categorize the driver's intent into one of the above-mentioned three modes. In particular, the motions of both the accelerator and brake pedals are continuously measured at the start, acceleration, constant speed running, reduced speed and stop, and other conditions, and the measured results are categorized using membership functions.

According to the categorized results, the sensitivity of depressing an accelerator pedal for example is made high for a driver with "Sporty" preference, and is lowered for a driver with "Gentle" preference.

The engine characteristics are controlled in accordance with the driving environments and/or the driver's preferences as described above so that comfortable driveability and riding comfort are assured as well as a vehicle matched to the driver's preference.

Figs. 1A and 1B show the relation between measuring variables and the driving environments and driver's preferences;

3

Fig. 2 schematically shows the structure of a typical example of an engine control apparatus according to the present invention;

Fig. 3 is a flow chart for explaining the engine control operation according to a first embodiment of the present invention;

Fig. 4 illustrates the concepts of the engine control process contents shown in Fig. 3;

Figs. 5A to 5F show examples of the membership functions shown in Fig. 4;

Fig. 6 shows an example of a control mechanism for controlling the depression repulsion force of an accelerator pedal;

Fig. 7 illustrates the concepts of the engine control process contents according to a second embodiment of the invention;

Fig. 8 shows another example of a control mechanism for controlling the depression repulsion force of an accelerator pedal;

Fig. 9 illustrates a case where the present invention is applied to an electronic throttle valve;

Figs. 10A and 10B are functional block diagrams illustrating the controls made with respect to Figs. 6 and 8 and Fig. 9, respectively;

Fig. 11 illustrates the concepts of the engine control process contents according to a third embodiment of the invention;

Fig. 12 is a flow chart showing the engine control operation according to a fourth embodiment of the invention;

Fig. 13 is a flow chart showing an example of the driving condition discrimination unit shown in Fig. 12;

Figs. 14A to 14D illustrate the process contents shown in Fig. 12;

Figs. 15A to 15E show various patterns of target acceleration rate characteristics; and

Fig. 16 is a block diagram for explaining the engine control operation according to a fifth embodiment of the invention.

The embodiments of the electronic engine control apparatus according to the present invention will be described below with reference to the accompanying drawings.

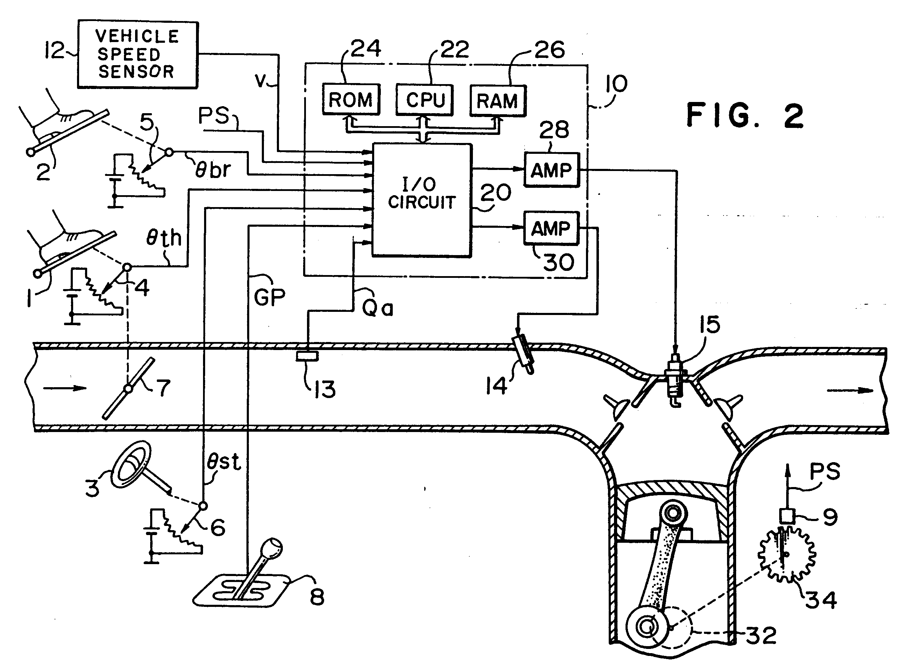

Fig. 2 shows the structure of a typical example of the electronic engine control apparatus. In this embodiment, the driving environments are discriminated based on the measured values of each measuring variable using the structure shown in Fig. 2, and the engine control parameter value is changed in accordance with the discrimination result.

In the figure, reference numeral 1 denotes an accelerator pedal, 2 a brake pedal, and 3 a steering wheel. Reference numerals 4 and 5 denote rheostats whose sliding contacts move by the amounts corresponding to the depression amounts of the accelerator and brake pedals 1 and 2, respectively. An output voltage $\theta_{br}$ of the rheostat 5 represents the depression angle of the brake pedal, and an output voltage $\theta_{th}$ of the rheostat 4 represents the depression angle of the accelerator pedal, i.e., the opening angle of a throttle valve 7. Similarly, reference numeral 6 denotes a rheostat whose sliding contact moves by the amount corresponding to the rotary angle of the steering wheel which is represented by an output voltage $\theta_{st}$ of the rheostat 6. In the embodiment shown in Fig. 2, the throttle valve 7 which mechanically couples to the accelerator pedal 1 is used by way of example. Reference numeral 8 denotes a gear position detector which detects the gear position of a shift lever, the output signal Gp therefrom being representative of the gear position. Reference numeral 9 denotes an angular position sensor which is mounted facing a gear 34 interlocking with a crank shaft 32 and outputs a position signal Ps at a predetermined number of rotations of the gear, e.g., every one rotation. Reference numeral 12 denotes a vehicle speed sensor whose output signal v represents of a vehicle speed. Reference numeral 13 denotes an air flow meter which measures the air flow amount into an intake manifold. Reference numeral 14 denotes a fuel injection valve, and 15 an ignition plug. Reference numeral 10 denotes a control unit which processes inputted signals v, Ps, $\theta_{br}$, $\theta_{th}$, $\theta_{st}$, Gp and Qa and supplies control signals to the fuel injection valve 14 and the ignition plug 15. The control unit 10 includes an I/O circuit 20, a central processing unit (CPU) 22, a read-only memory (ROM) 24, a random access memory (RAM) 26, and amplifiers 28 and 30.

The measured values of each measuring variable are time sequentially processed by the control unit 10. The process contents are to differentiate representative measured values. The differentiated values of representative measuring variables are given by the following equations where t, t + 1, t + 2, ... are sample timings at the measurement.

$$\Delta \theta_{th}(t) = \theta_{th}(t + 1) - \theta_{th}(t)$$
$$\Delta \theta_{st}(t) = \theta_{st}(t + 1) - \theta_{st}(t)$$
$$\Delta v(t) = v(t + 1) - v(t)$$
$$\Delta N(t) = N(t + 1) - N(t)$$

where N represents an engine speed (revolution number of engine per unit time) which is given, e.g., by the number of inputted signals Ps's during a unit time.

The control unit 10 causes the measured values including the differentiated values to be processed with membership functions of the Fuzzy theory so that the occurrence frequencies of each measuring variable are obtained and the driving environment is estimated by subjecting the occurrence frequencies to the conversion matrix. Then, the control parameters changed in accordance with the estimated value of the driving environment are obtained. The fuel injection amount and the spark timings by way of example are adjusted in accordance with the changed control parameters.

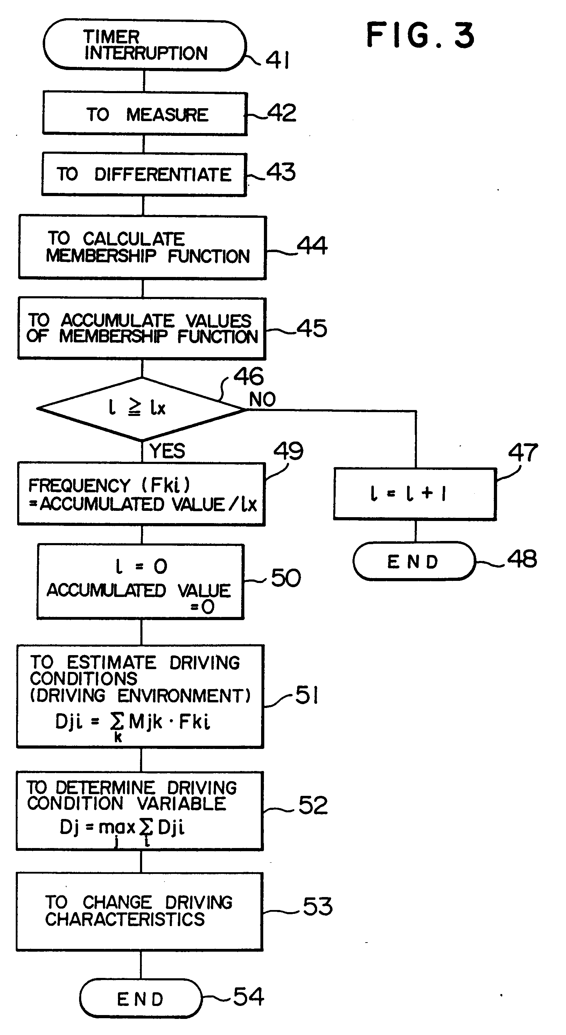

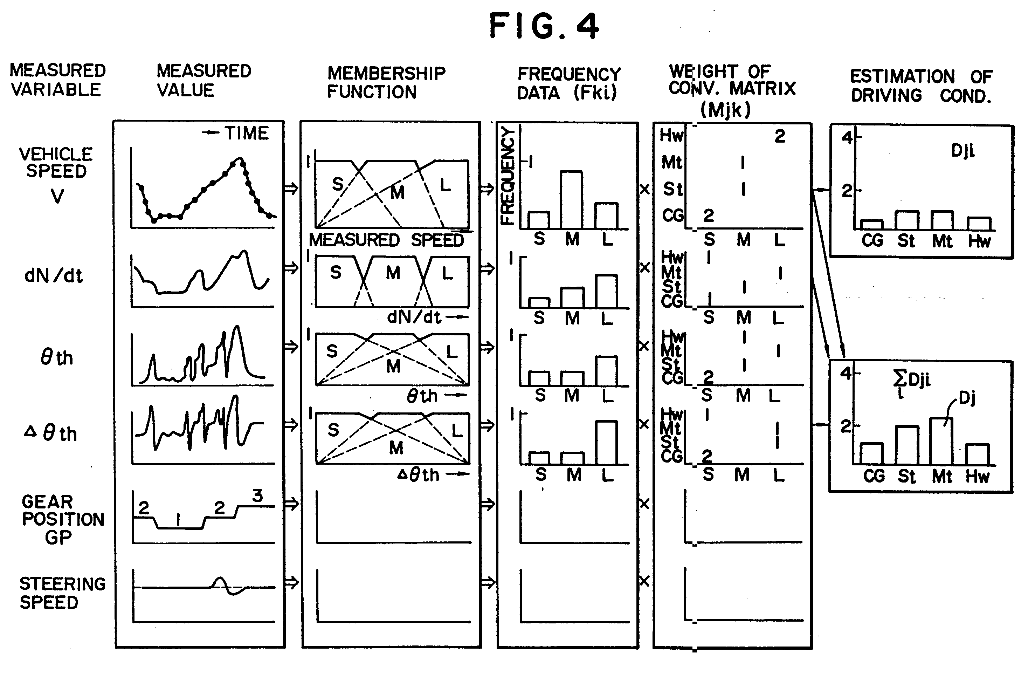

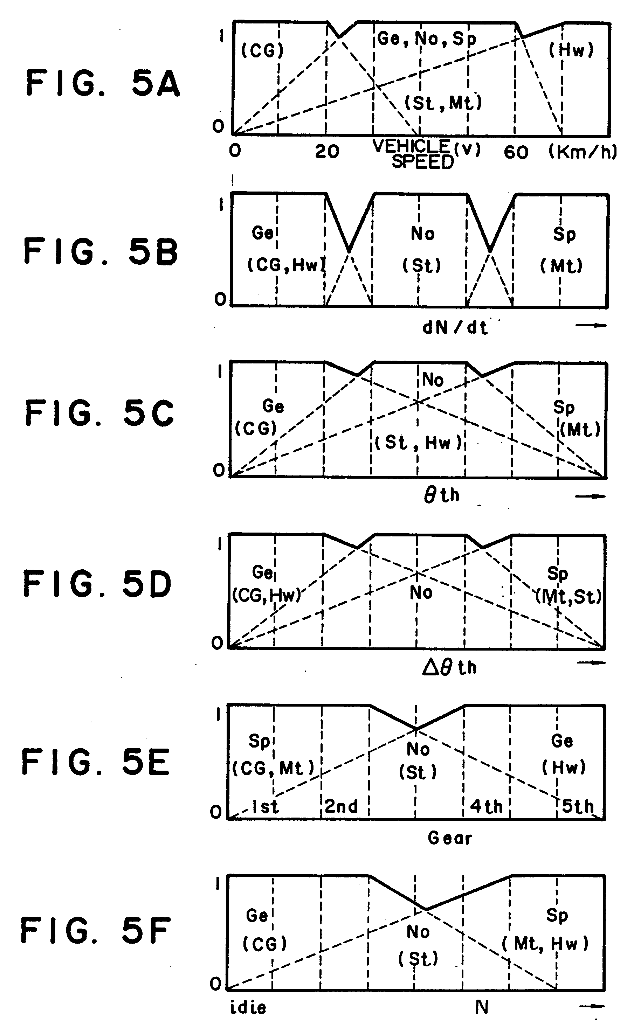

The engine control operation by the control unit 10 will be described with reference to the flow chart of Fig. 3, Fig. 4 showing the engine control concepts, and Figs. 5A to 5F showing examples of membership functions.

The membership functions shown in Figs. 5A to 5F are the examples for the membership functions shown in Fig. 4, which have been obtained using a certain type of a vehicle.

For example, by categorizing the driving environments into a congested road, an urban street, a suburban road, a mountain road, and a highway, the respective running features can be grasped.

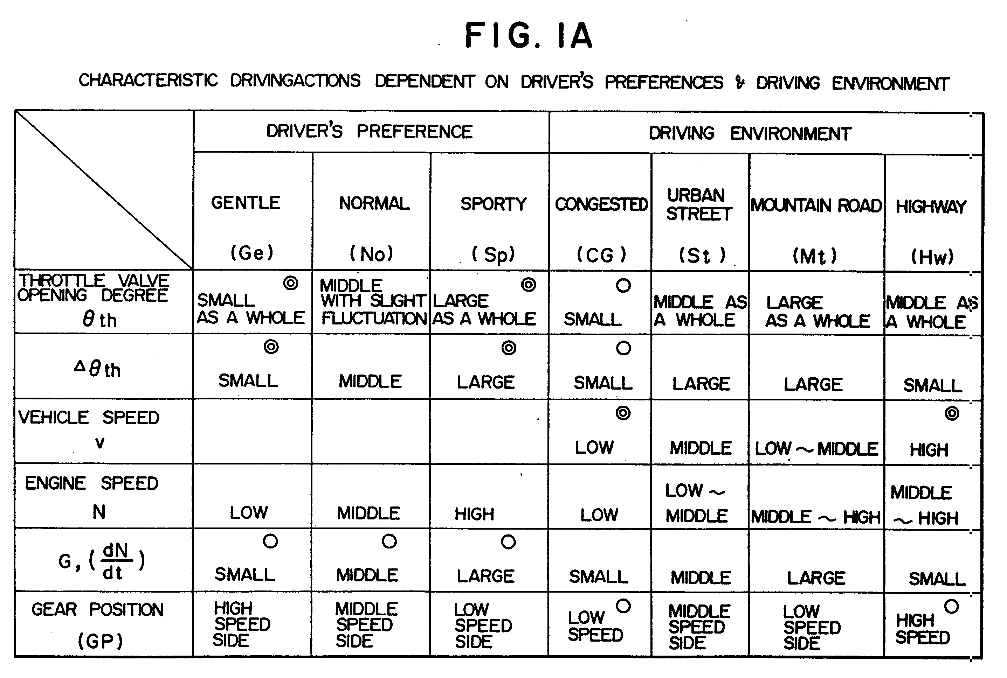

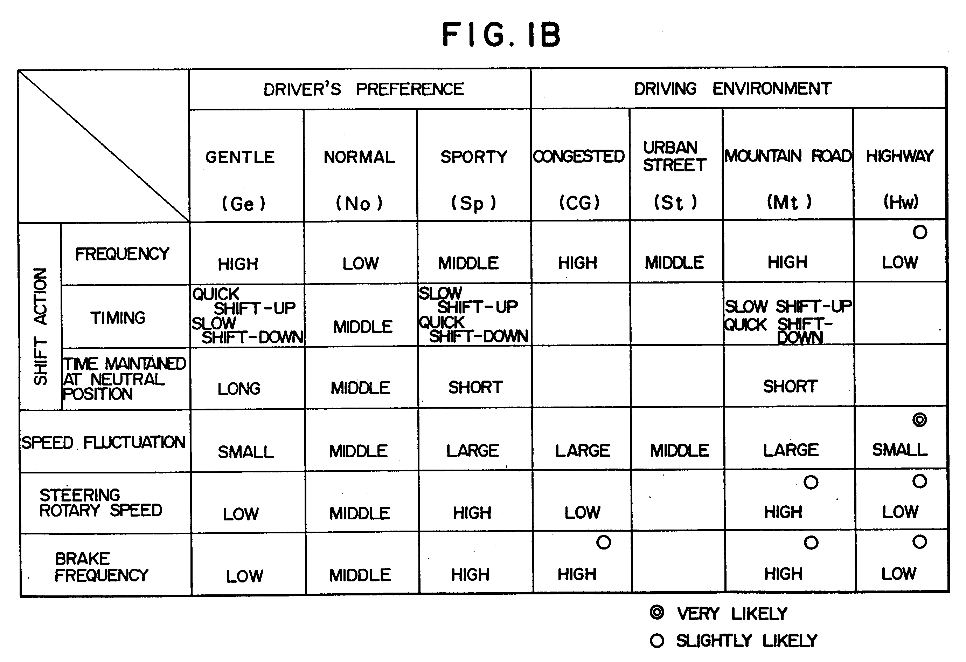

The feature of each driving environment will be described below which is shown in Figs. 1A and 1B, and Figs. 5A to 5F.

Generally, the vehicle speed v is high and the gear is changed rarely during a highway running. Therefore, if the vehicle speed is high and a top gear is used with low frequency of shift change operation, it can be discriminated as a highway running.

Generally, a forward operation and a stop operation are repeated on a congested road. Therefore, the vehicle speed is low, the rate of change dN/dt of the engine speed N and $\Delta\theta_{th}$ are small, and the brake operation frequency is high.

There come less junctions on a suburban road than on an urban street so that a vehicle generally runs near at the limited speed. Therefore, if the vehicle speed maintains near the limited speed and the frequency and range of steering operation is small, it can be discriminated as a suburban road running.

There are many junctions during running on an urban street. Therefore, the operation frequency of both the brake pedal and steering wheel is high. The vehicle speed v, and acceleration rate $\Delta N$ (= dN/dt) take middle values.

There are many curves on a mountain road so that acceleration and deceleration are repeated and the steering wheel is frequently operated. Therefore, in general, if $\Delta\theta_{th}$ and dN/dt are large, if the frequency of change in depressing the brake and accelerator pedals is high, and if the frequency of operating the steering wheel is high, it can be discriminated as a mountain road running.

As above, in this embodiment, for example, if the vehicle speed v is high, it is discriminated as a highway running, if the vehicle speed v is low and the change rate dN/dt of the engine speed is small, it is discriminated as a congested road running, and if both $\Delta\theta_{th}$ and dN/dt are large, it is discriminated as a mountain road running.

The difference between the running conditions on a suburban road and an urban street is generally small, and the discrimination therebetween is less significant. Therefore, in this embodiment, only the urban street is to be discriminated. The urban street running is discriminated if the vehicle speed v and acceleration rate $\Delta N$ take middle values.

The suburban road and the urban street may be categorized and discriminated dependent upon the environments and countries where a vehicle is used. It is not necessary to discriminate the mountain road running in the district where there is no mountain. Namely, categorization of driving environments and measuring variables for such categorization are properly selected dependent upon a particular environment where a vehicle is used.

In this embodiment, it is therefore assumed that the driving environments are categorized into the above-mentioned four types and discriminated based on, e.g., the vehicle speed v, engine speed change rate (acceleration rate) dN/dt, and throttle opening degree change rate $\Delta\theta_{th}$ among various measuring variables. Thus, the membership functions and the like for the gear position and steering speed are omitted in Fig. 4. Fig. 4 illustrates the functions performed by blocks 44 to 52 which will be described below.

The program shown in Fig. 3 starts upon a timer interruption at block 41. The measuring variables representative of the driving environments and the driver's preference are measured by various sensors at block 42. Measured signals Ps, v and $\theta_{th}$ are inputted to the I/O circuit 20, the engine speed N being calculated using Ps. Among the measuring variables those variables whose change with time is requested to be obtained, i.e., N and $\theta_{th}$ are subjected to differentiation at block 43 to obtain the differentiated values $\Delta N$ (= dN/dt) and $\Delta\theta_{th}$. The time-sequential values v, $\Delta N$ and $\Delta\theta_{th}$ are categorized, for each measuring variable, preferably into three large (L), middle (M) and small (S) groups, by using the membership functions (Fig. 4, Figs. 5A, 5B and 5D) at block 44. The probability of categorization of each measured value into a particular group is given by a membership function value.

The membership function values at each timer interruption are accumulated for each measuring variable at block 45.

At block 46, the number $\ell$ of timer interruptions is compared with a predetermined number $\ell x$ to check if the former becomes equal to the latter or not.

The timer interruption period multiplied by $\ell x$ is the period for evaluating the driving environments. If the timer interruption number $\ell$ is smaller than $\ell x$, the value $\ell$ is incremented by 1 at block 47 to follow block 48.

If the timer interruption number $\ell$ becomes $\ell x$, the accumulated value of membership function values for each measuring variable is divided by $\ell x$ at block 49 to obtain occurrence frequencies Fki of each of the large, middle and small groups (k) for each measuring variable (i).

At block 50, the timer interruption number $\ell$ and the accumulated values are initialized.

The following equation (1) is used to perform matrix calculation for estimating the driving environment at block 51:

$$\mathtt{Dji} = \sum_{k} \mathtt{Mjk} \cdot \mathtt{Fki} \qquad\qquad ..... (1)$$

where

Fki = occurrence frequency of a measuring variable;

Mjk = conversion matrix for conversion from occurrence frequency to driving condition: weight for selecting driving condition;

Dji = value indicating a possibility of each driving condition (environment) (j);

i = number of measuring variable: vehicle speed (v), dN/dt, $\theta_{th}$, $\Delta\,\theta_{th}$, Gear, engine speed (n), etc.;

j = number of driving condition (environment): congestion (CG), urban street (ST), mountain road (Mt), and highway (HW); and

k = group number of measured value: small (S), middle (M) and large (L).

The measuring variables i are dN/dt and $\Delta\,\theta_{th}$ in this embodiment.

The driving environment is determined during the evaluation period as in the following. The values of Dji for necessary measuring variables (i) are added together. Namely, the values of Dji for v, dN/dt and $\Delta\,\theta_{th}$ are added together to obtain

$$\sum_{i} \mathtt{Dji}$$

for each environment. The driving environment is determined as the driving condition (j) which takes a largest value among the added results Dji. The maximum value Dj is given by the following equation (2).

$$\mathtt{Dj} = \max_{j}\ \sum_{i} \mathtt{Dji} \qquad\qquad ..... (2)$$

The value Dj is called as a driving condition variable.

In particular, in the example shown in Fig. 4, the value of

$$\sum_{i} \mathtt{Dji}$$

for Mt environment is the largest among the calculated values

$$\sum_i Dji$$

for CG, St, Mt, and Hw so that the value Dj is determined as the driving condition variable for the mountain road environment (Mt). Thus, the driving condition is discriminated as the mountain road (Mt). In this case, the value Dj may be determined as the driving condition variable on condition that it excesses a predetermined value, e.g., 2.0.

The driving characteristics are changed in accordance with the determined driving condition variable Dj at block 53.

In the example shown in Fig. 4, the values of Dji obtained only from the vehicle speed v and the values of Dji obtained from the vehicle speed v, the engine speed change rate dN/dt and the throttle valve opening degree change rate $\Delta \theta_{th}$ are shown for the comparison sake. The latter values are shown more effective for determining the value Dj.

In order to change the driving characteristics, the following known elementary technology may be utilized by way of example. In the case where the accelerator pedal and the throttle valve are directly coupled via a linkage mechanism, there are utilized a method of changing a depression repulsion force of the accelerator pedal, a method of changing an air fuel ratio (A/F) by changing the coefficient (e.g., $k_M$) of the equation $Ti = k_M \cdot kQ_a/N$ for calculating the injected fuel amount, and a method of changing the ignition or spark timings. In the case where a vehicle adopting an electronic throttle is used, there are utilized a method of changing the transmission characteristic from the accelerator pedal to the throttle valve (as disclosed, e.g., in USP No. 4,597,049), a method of servo-controlling so as to obtain a desired acceleration rate pattern of a vehicle which has been obtained based on the motion of the accelerator pedal. For an A/T vehicle, there is utilized a method of changing the characteristic of a torque converter.

In this embodiment, the method of changing the ignition timings, which is one of the readily realizable methods among the above-mentioned driving characteristics changing methods, was chosen to give the following description of changing the driving characteristics.

The ignition or spark timings $\theta_{ad}$ are determined by the following equation (3) at block 53:

$$\theta_{ad} = f (DJ, Djmax, \overline{\theta}_{ad}) \qquad (3)$$

The spark timing $\overline{\theta}_{ad}$ at the maximum torque is determined by the above equation based on a deviation of the value Dj from a value Djmax which is a value Dj corresponding to the spark timing $\overline{\theta}_{ad}$ at the maximum torque. In the case where the range of changing the spark timings can be narrowed, the following equation (4) is used as an approximate equation:

$$\theta_{ad} = \frac{Dj}{Djmax} \overline{\theta}_{ad} \qquad \ldots \ldots (4)$$

In accordance with the thus obtained $\theta_{ad}$, the spark timings are controlled. The $\theta_{ad}$ may be obtained by the equation (4). Otherwise, the values of $\theta_{ad}$ corresponding to the values Dj may be read from the predetermined map stored in the ROM 24.

In general, the spark timings on a congested road, urban street, mountain road and highway are advanced further relative to each other in this order.

The program shown in Fig. 3 terminates at block 54 and waits for a next timer interruption.

The spark timings have been calculated based on the values Dj at block 53. However, the spark timings may be determined in accordance with the type of a driving condition variable determined at block 52, i.e., in accordance with the determined driving environment among CG, St, Mt, and Hw environments. In particular, spark timings near the ordinary spark timings are used in case of St and Mt environments, late spark timings are used in case of CG environment, advanced spark timings are used in case of Hw environment. The values of spark timings for each driving environment may be stored, e.g. in a ROM in the form of map to read therefrom the spark timings corresponding to the determined environment.

Other examples of a method of changing the driving characteristics will be described below.

First, a method of changing an air fuel ratio (A/F) by changing, in accordance with the determined driving environment, the coefficient (e.g., $k_M$) of the equation for calculating the injected fuel amount will be described.

During the injected fuel amount calculation, the opening time Ti of the injector 14 is obtained by the following equation (5) using a sucked air amount Qa measured by the air flow meter 13 and the engine speed N:

$$Ti = k_M \cdot k \cdot Qa/N \qquad (5)$$

where k is a conversion coefficient, $k_M$ is a coefficient for a determined driving environment which takes the following values by way of example:

highway running            $k_M = 1.1$
mountain road running    $k_M = 1.05$
urban street running      $k_M = 1.0$
congested road running   $k_M = 0.9$

Next, a method of changing a depression repulsion force of a accelerator pedal in accordance with the determined driving environment will be described for the case where the accelerator pedal and the throttle valve are coupled via a linkage mechanism.

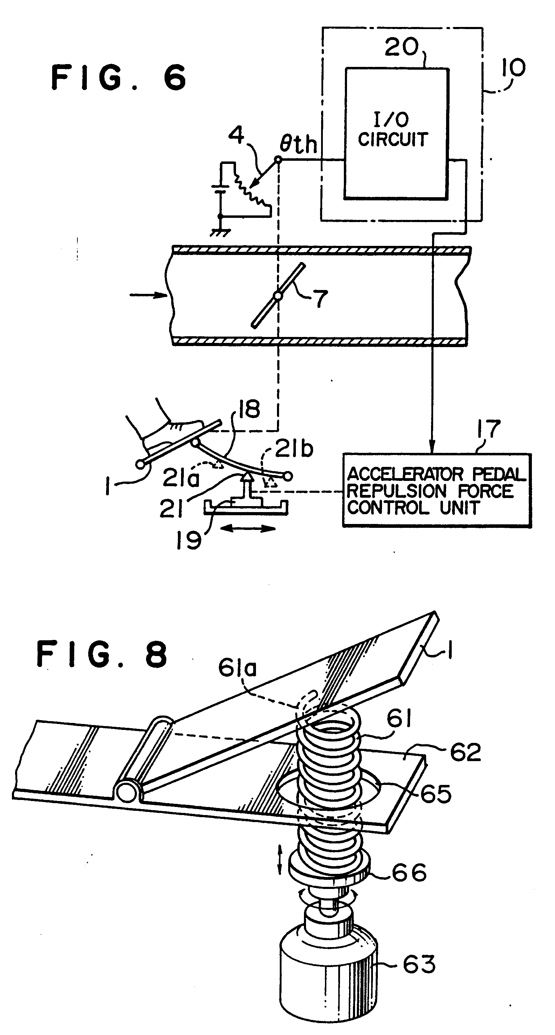

Fig. 6 shows an example of a depression repulsion force controlling mechanism for an accelerator pedal which is directly coupled to the throttle valve. In the figure, the depression repulsion force of the accelerator pedal 1 is controlled such that the fulcrum 21 of a plate spring 18 for returning the accelerator pedal 1 is moved by a fulcrum movement mechanism 19 which is actuated by an accelerator pedal repulsion force control unit 17.

The control unit 17 is responsive to a signal from the I/O circuit 20 representative of the discriminated driving environment and changes the position of the mechanism 19. The control unit 17 may use, e.g., a stepping motor. The fulcrum 21 is moved to a position 21a in the case of a congested road to increase the repulsion force, and it is moved to a position 21b in the case of a highway road to reduce the repulsion force. In the case of an urban street and a mountain road, the fulcrum 21 is moved to an intermediate position between the positions 21a and 21b.

In this embodiment, any one of the control parameters including the spark timings, injected fuel amount, accelerator pedal repulsion force and etc. may be adjusted, or alternatively a plurality of control parameters may be adjusted at a time.

The second embodiment of the present invention will then be described.

In this embodiment, the driver's preferences are discriminated based on the measured values of each measuring variable using the structure shown in Fig. 2, and the engine control parameter value is changed in accordance with the discrimination result.

The control unit 10 causes the measured values including the differentiated values to be processed with membership functions of the Fuzzy theory so that the occurrence frequencies of each measuring variable are obtained and the driver's preference is estimated by subjecting the occurrence frequencies to the conversion matrix. Then, the control parameters changed in accordance with the estimated value of the driver's preference are obtained. The fuel injection amount and the spark timings by way of example are calculated in accordance with the changed control parameters.

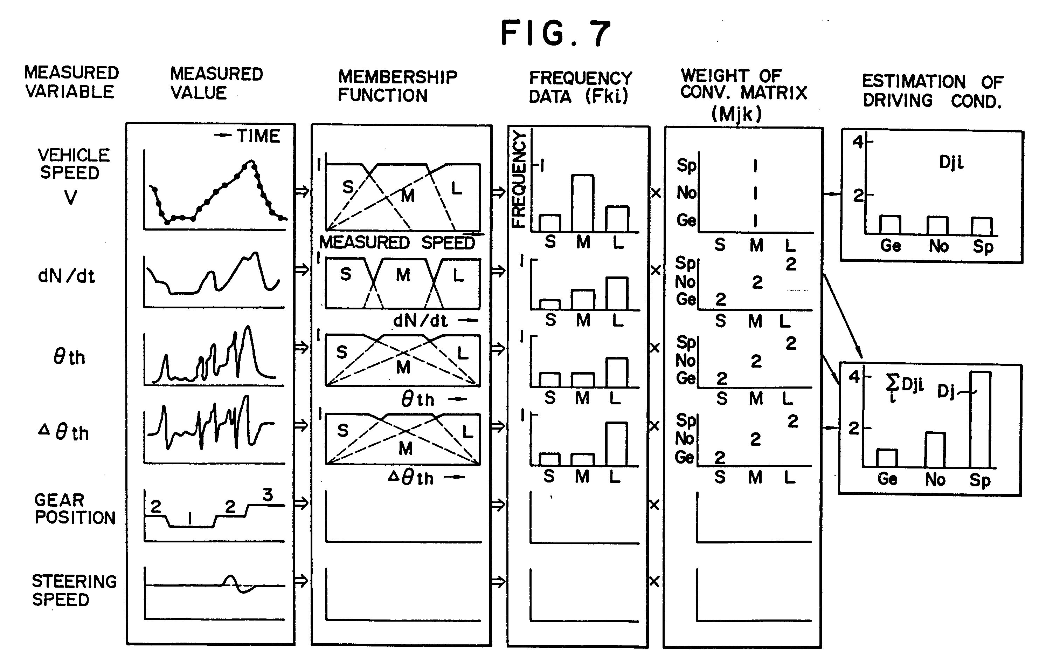

The engine control operation by the control unit 10 will be described with reference to the flow chart of Fig. 3, Fig. 7 showing the engine control concepts, and Figs. 5A to 5F showing examples of membership functions.

The membership functions shown in Figs. 5A to 5F are the examples for the membership functions shown in Fig. 4, which have been obtained using a certain type of a vehicle.

For example, the driver's preferences can be categorized into "Sporty (Sp)", "Gentle (Ge)" and "Normal (No)".

The feature of each driver's preference will be described below which is shown in Figs. 1A and 1B, and Figs. 5A to 5F.

Generally, there is a tendency that where a vehicle matched to the average preference is used, a driver with "Sporty" preference more abruptly depresses the accelerator pedal and brake pedal than a driver with "Normal" preference, and a driver with "Gentle" preference more gently depresses them. Therefore, with a large $\Delta\theta_{th}$, it is discriminated as "Sporty", whereas if it is small, it is discriminated as "Gentle".

Also, if the frequency of "large (L)" of dN/dt (or $\Delta$N) is low, it is discriminated as "Sporty", whereas if the frequency of "small (S)" is high, it is discriminated as "Gentle".

Therefore, in this embodiment, it is discriminated as "Sporty" if for example the values $\theta_{th}, \Delta\theta_{th}$ and dN/dt are large, as "Gentle" if they are small, and as "Normal" if they are middle.

In this embodiment, it is therefore assumed that the driver's preferences are categorized into three types and discriminated based on the throttle opening degree $\theta_{th}$, throttle opening degree change rate $\Delta\theta_{th}$ and engine acceleration rate $\Delta N$ (dN/dt) among various measuring variables. Thus, the membership functions and the like for the gear position and steering speed are omitted in Fig. 4.

The driving condition is estimated in accordance with the flow chart shown in Fig. 3 using the values $\theta_{th}$, $\Delta\theta_{th}$ and dN/dt as the measuring variables, in a similar manner to the first embodiment.

The driving condition, i.e., driver's preference can be obtained at block 51 using the equation (1), where

Dji = value indicating a possibility of each driving condition (preference) (j),

i = number of measuring variable: $\theta_{th}$, $\Delta\theta_{th}$, dN/dt,

j = number of driving condition (preference): Sporty (SP), Normal (No), and Gentle (Ge).

The driver's preference is determined during the evaluation period as in the following. The values of Dji for necessary measuring variables (i) are added together. Namely, the values of Dji for dN/dt, $\theta_{th}$ and $\Delta\theta_{th}$ are added together to obtain

$$\sum_i Dji$$

for each preference. The driver's preference is determined as the driving condition (j) which takes a largest value among the added results Dji.

In particular, in the example shown in Fig. 7, the value of

$$\sum_i Dji$$

Dji for Sp preference is the largest among the calculated values

$$\sum_i Dji$$

for Sp, Ge and No so that the value Dj is determined as the driving condition variable for the Sporty preference. Thus, the driver's preference is discriminated as the "Sporty (Sp)".

The driving characteristics are changed in accordance with the determined driving condition variable Dj at block 53, in a similar manner to the first embodiment. The spark timings may be determined from the equation (4) using the determined Dj.

The spark timings may be determined in accordance with the type of a driving condition variable determined at block 52, i.e., in accordance with the determined driver's preference among Sp, No and Ge preferences. In particular, spark timings near the ordinary spark timings are used in case of No preference, late spark timings are used in case of Ge preference, advanced spark timings are used in case of Sp preference, to thereby enable a maximum allowable torque of the engine.

If the injected fuel amount is controlled in accordance with a driver's preference, the coefficient $k_M$ of the equation (5) is set as in the following by way of example:

Sporty preference      $k_M$ = 1.1

Normal preference      $k_M$ = 1.0

Gentle preference      $k_M$ = 0.9

If the depression repulsion force adjustment mechanism for the accelerator pedal 1 shown in Fig. 6 is used, the fulcrum 21 is moved to 21a in the case of Ge preference to increase the repulsion force, and it is moved to 21b in the case of Sp preference to reduce the repulsion force. In the case of No preference, the fulcrum 21 is moved to an intermediate position between the positions 21a and 21b.

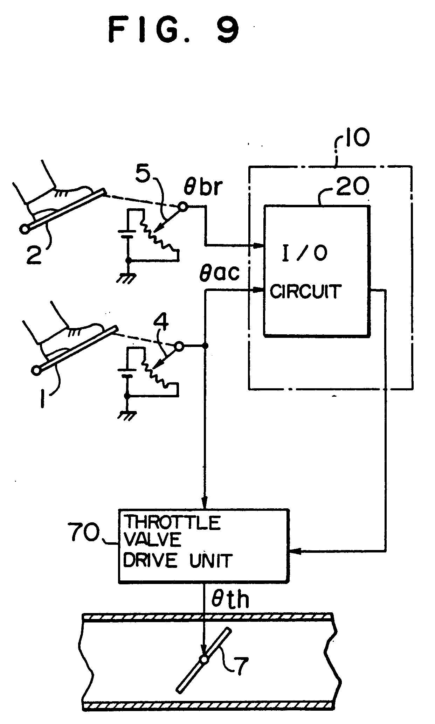

A substitute for the depression repulsion force adjustment mechanism for the accelerator pedal 1 shown in Fig. 6 may use that shown in Fig. 8. In Fig. 8, the repulsion force for the accelerator pedal 1 is stepwise adjustable by stepwise changing the length of a force applying spring 61 between a support plate 62 and its top end 61a through up/down movement of a saucer 66 by a pulse motor 63. Reference numeral 65 denotes a hole formed in the plate 62 for allowing the spring 61 to pass therethrough. The motor 63 is rotated by a predetermined number of revolutions in response to a signal representative of the "preference" outputted from the I/O circuit 20.

Alternately, a link mechanism may be in the middle of a wire which couples the accelerator pedal and

EP 0 304 089 B1

the throttle valve. The length of the link is adjusted in the similar manner as above to realize the adjustable repulsion force.

An example of a throttle valve control is shown in Fig. 9 wherein an accelerator pedal 1 and a throttle valve 7 are electrically interconnected. As shown in Fig. 9, the response characteristic of a throttle valve drive unit 70 for converting an accelerator pedal angle $\theta_{ac}$ into a throttle valve angle $\theta_{th}$ is changed with the discrimination result of "preference" from the control unit. The response characteristic is made adjustable by choosing the transfer function as a first order delay and changing the time constant thereof. The characteristic can be expressed by the following transfer equation (6):

$$G(S) = \frac{\theta_{th}}{\theta_{ac}} = \frac{1}{1+TS} \qquad \ldots \ldots (6)$$

where T represents a time constant. Assuming that T1 < T2 < T3, then the time constants for respective discrimination results of preferences are set as in the following:

Sporty preference    T = T1
Normal preference    T = T2
Gentle preference    T = T3

As a method of controlling the throttle valve angle $\theta_{th}$ with the throttle valve being driven electrically, there is also known a method whereby a target acceleration rate is given instead of a first order delay to control the throttle valve angle $\theta_{th}$ to follow the target acceleration rate. Such a method is disclosed in USP No. 55,530 titled "SYSTEM AND METHOD FOR ELECTRONIC CONTROL OF INTERNAL COMBUSTION ENGINE" filed on May 29, 1987 by the same assignee as the present application.

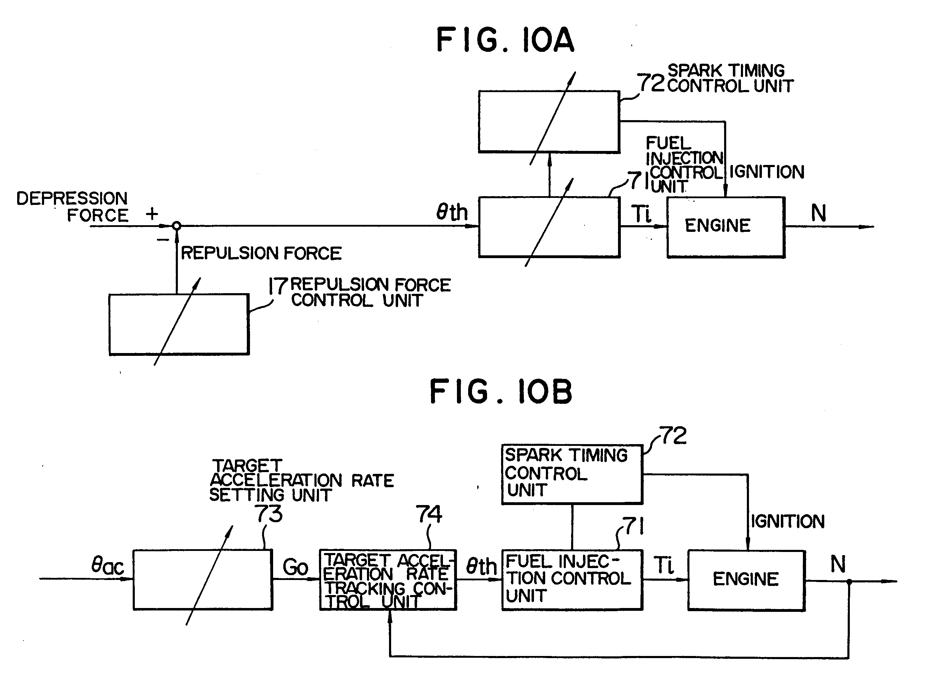

Two particular arrangements have been described of the method of changing the driving characteristics by using an accelerator pedal. In one method, the repulsion force is changed with a preference where the accelerator pedal and the throttle valve are directly coupled, and in the other method, $\theta_{th}$ is controlled to follow a target acceleration assigned to a preference where an electric or electronic circuit is interposed therebetween. The functional block diagrams for both the methods are shown in Figs. 10A and 10B. The blocks with an arrow are used in adjusting the driving characteristics of a vehicle to a driver's preference. In the case shown in Fig. 10A where an accelerator pedal and a throttle valve are directly coupled, any one of three adjustment parameters is adjusted in accordance with a driver's preference, the three parameters including the stiffness of the spring in the repulsion force control unit 17, an air/fuel ratio by a fuel injection control unit 71, and spark timings by a spark timing control unit 72. The functions of the spark timing control unit 72 and the fuel injection control unit 71 are adjusted in accordance with a driver's preference.

In the case shown in Fig. 10B, a target acceleration rate dN/dt is set by a target acceleration rate setting unit 73 in accordance with $\theta_{ac}$ and a preference. A target acceleration rate tracking control unit 74 controls the throttle opening degree $\theta_{th}$ in accordance with a deviation between the target acceleration rate G0 and an actual vehicle acceleration rate detected value G. The functions of the units 73 and 74 are allotted to the control unit 10. The acceleration rate detected value G can be obtained from a differentiated value $\Delta N$ of engine speed N and a gear ratio.

A preference to a particular driveability can be recognized to some extent by using only the accelerator pedal. However, since the driver action may include abnormal neutral gear operation such as racing and double clutch, the accuracy of discrimination may be degraded if only with the accelerator pedal. In view of this, since a driver with "Sporty" preference often performs abrupt acceleration and deceleration, discrimination of a preference may be made with high accuracy based on the degree of changes in position and speed of both the accelerator and brake pedals. Discrimination of a preference may be made with further accuracy by considering the occurrence frequencies of "large/small" measured values of the vehicle speed, engine speed and gear position.

It becomes sometimes necessary to abruptly accelerate a vehicle during driving it in order to avoid obstacles. If a driver with "Gentle" preference to driveability abruptly depresses the accelerator pedal, the preference is changed to "Sporty". In this case, a change to "Sporty" may be informed by a lamp or a sound. In particular, a buzzer or a lamp may be connected to an output terminal of the I/O circuit 20 to inform a change of a preference to driveability by a light or a sound.

Examples shown in Figs. 8, 9 and 10B are applicable to the first embodiment.

Next, the third embodiment of the present invention will be described.

If a driving condition is of a type which is given proper driving characteristics through discrimination

EP 0 304 089 B1

using either one of the driving environment and the driver's preference, it suffices to adopt one of the methods as described with the first and second embodiments. However, there are cases where the engine control cannot be effectively made if the driving environments or the driver's preferences are independently used in discriminating them.

For example, during a congested road running and highway running, the driving condition is influenced by the driving environment but less influenced by the driver's preference, whereas in an urban street running and mountain road running, the driving condition is much influenced by the driver's preference.

In consideration of the above points, in this embodiment, the driving condition variables are categorized into five classes, i.e., (1) Congestion (CG), (2) Gentle (Ge), (3) Normal (No), (4) Sporty (Sp), and (5) Highway (Hw).

In this embodiment, the measured values of each measuring variable are used with the structure shown in Fig. 2 in discriminating the driving condition as one of the above five classes, and the engine control parameter value is changed in accordance with the discrimination result.

The following features have been confirmed for the case where the driving environments are categorized into a congested road, a suburban road, an urban street, a mountain road, and a highway, by way of example.

Generally, the vehicle speed is high and the gear is changed rarely during a highway running. Therefore, if the vehicle speed is high, and a top gear is used with high occurrence frequency of small number of gear shifts, then it can be considered as a highway running. During the highway running, the driver's preference is not predominant so that the spark timings are generally advanced to obtain an allowable maximum torque. However, in a certain type of vehicles, the spark timings may be delayed in accordance with a driver's preference to match "Normal" or "Gentle" preference.

Generally, a forward operation and a stop operation are repeated on a congested road. Therefore, the vehicle speed is low and the brake operation frequency is high. In this case, the driver's preference is not predominant so that a gentle acceleration is generally desirable. Thus, the spark timings are caused to be delayed. The spark timings may be adjusted to those at "Gentle" preference of driveability.

There are less junctions on a suburban road than on an urban street so that a vehicle generally runs near at the limited speed and the frequency and range of steering operation is small, which can be discriminated as a suburban road running. In this case, the spark timings are not newly adjusted in general, and the spark timings prior to the present discrimination may be maintained. The reason for this is that it is desirable to have an engine speed near the allowable maximum torque during the constant speed running in view of exhausted gas and fuel consumption, and that the driver's preference becomes predominant at transition conditions.

There come many junctions during running on an urban street. Therefore, the operation frequency of both the brake pedal and steering wheel is high. That the change between the accelerator pedal and the brake pedal is frequently performed means many transition conditions and so in this case the driver's preference becomes predominant. Accordingly, it is possible to discriminate both the driving environment and the driver's preference in an urban street running. If the frequency of "Large (L)" of dN/dt (or $\Delta$ N) is high, it can be discriminated as "Sporty", and on the contrary if the frequency of Small (S)" is high, it can be discriminated as "Gentle".

There are many curves on a mountain road so that acceleration and deceleration are repeated and the steering wheel is frequently operated. Thus, the case where the frequency of change in depressing the brake and accelerator pedals is high and the frequency of operating the steering wheel is high can be discriminated as a mountain road running. Since acceleration and deceleration are often repeated on a mountain road, the driver's preference becomes likely to be predominant. Similar to the urban street running, "Sporty" and "Gentle" preferences are discriminated in accordance with the frequencies of "Large/small" of dN/dt (or $\Delta$ N).

As above, in this embodiment, the congested road and highway runnings are discriminated to change the driving characteristics based on the discrimination results. For the remaining driving environments, the driver's preferences, i.e., "Sporty", "Normal" and "Gentle" preferences are discriminated to change the driving characteristics based on the discriminated results.

For discriminating the congested road and highway runnings, the values $\Delta\theta_{th}$, dN/dt and v shown in Figs. 1A, 1B and 5A to 5F are chosen as the measuring variables, and for discriminating the preferences, the measuring variables $\Delta\theta_{th}$ and dN/dt are chosen.

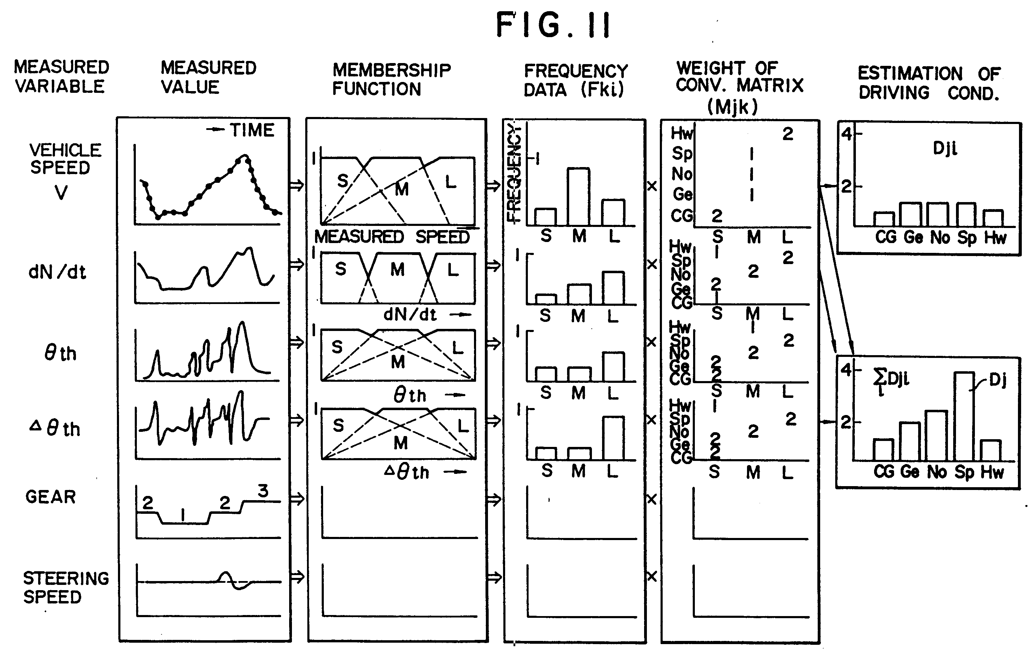

As a result, in this embodiment, v, $\Delta\theta_{th}$ anddN/dt are chosen as the measuring variables, and as the values of the conversion matrix Mjk, the values obtained by combining the values shown in Figs. 4 and 7 are chosen as shown in Fig. 11.

Fig. 11 shows the concepts of the engine control process contents of the third embodiment, and

11

corresponds to those shown in Figs. 4 and 7.

In this embodiment, the driving conditions, i.e., driving environments and driver's preferences are estimated using the measuring values v, $\Delta\theta_{th}$ and dN/dt in accordance with the flow chart shown in Fig. 3, in the similar manner to the first and second embodiments.

The driving conditions, i.e., driving environments and driver's preferences can be obtained by the equation (1) at block 51, where

Dji = value indicating a possibility of each driving condition (preference and driving environment),

i = number of measuring variable: v, $\Delta\theta_{th}$, dN/dt,

j = number of driving condition (preference and driving environment): Congested (CG), Sporty (Sp), Normal (No), Gentle (Ge), Highway (Hw).

The driving environment and driver's preference are determined during the evaluation period as in the following. The values Dji for necessary measuring variables (i) are added together. Namely, the values of Dji for dN/dt and $\Delta\theta_{th}$ are added together to obtain

$$\sum_{i} Dji$$

for each driver's preference and each driving environment. As the driver's preference and the driving environment, the driving condition (j) is determined which takes a largest value among the added results

$$\sum_{i} Dji.$$

In particular, in the example shown in Fig. 11, the value of

$$\sum_{i} Dji$$

for Sp preference is the largest among the calculated values

$$\sum_{i} Dji$$

for CG and Hw driving environments and Sp, Ge and No driver's preferences so that the value Dj is determined as the driving condition variable for the "Sporty" preference.

The driving characteristics are changed in accordance with the determined driving condition variable Dj at block 53, in a similar manner to the first and second embodiments.

In particular, for example, in the case where the spark timings are controlled in accordance with the value DJ, the spark timings are advanced until the allowable maximum torque is obtained in the case of Hw and Sp, the normal spark timings are used in the case of No, and the spark timings are delayed in the case of CG and Ge.

If the injected fuel amount is controlled in accordance with the value DJ, the coefficient $k_M$ of the equation (5) is set as in the following by way of example:

Sporty and Highway     $k_M = 1.1$

Normal     $k_M = 1.0$

Congested and Gentle     $k_M = 0.9$

As above, the spark timings, fuel injection time, depression repulsion force of acceleration pedal and the like are selectively controlled in accordance with the value Dj, in a similar manner to the first and second embodiments.

Next, the fourth embodiment of the present invention will be described.

As the method of discriminating the driver's preference, there is a method of discriminating based on the driving condition during the normal driving as described with the second embodiment. However, the period while the driver's preference is predominant is at the transition conditions. Therefore, a method can be thought of whereby the driver's preference is discriminated based on both the normal driving conditions and the transition conditions, or based on only the transition conditions. This method is easier to discriminate the driver's preference.

The driver's preference may be discriminated based on, for example, the manner the accelerator pedal is depressed at the start or constant speed running, the manner the brake pedal is depressed before stopping, the manner the steering wheel is rotated during driving, and the like.

Therefore, in order to discriminate the driver's preference, particular cases among the driving conditions are selected to analyze the driver action during such particular cases. To recognize the driving conditions during a predetermined period, it is practical to classify and process the driver action using membership functions of the Fuzzy theory similar to the above embodiments.

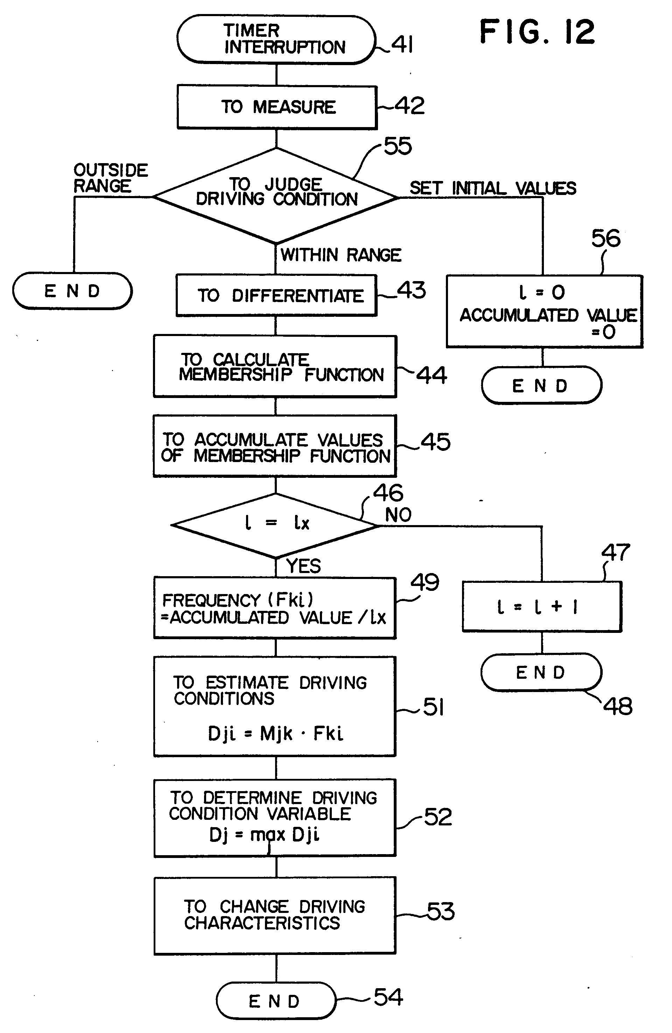

The discrimination of the driver's preference and the method of changing the driving characteristics of a vehicle in accordance with the discrimination results will be described with reference to the flow chart shown in Fig. 12. The flow chart of Fig. 12 is added with driving condition judging unit (blocks 55 and 56) for judging the driving conditions used in discriminating the driver's preference, and the block 50 of the flow chart shown in Fig. 3 is omitted.

With the driving condition judging unit, it is judged at block 55 using the measured values of a measuring variable as to whether the driving condition is within the range suitable for discriminating the driver's preference or not. If it is within the range, the process of the block 43 and succeeding blocks is performed. If not, it exceeds the upper limit of the range or does not reach the lower limit. In one of the two cases, initial values for use in the next discrimination are set (block 56), and in the other case, no process is performed or such initial values are also set.

At block 52, the driver's preference as the driving condition is determined. The driving characteristics are changed in accordance with the determined result. As the changing methods, a proper method is selected from the above-described technology.

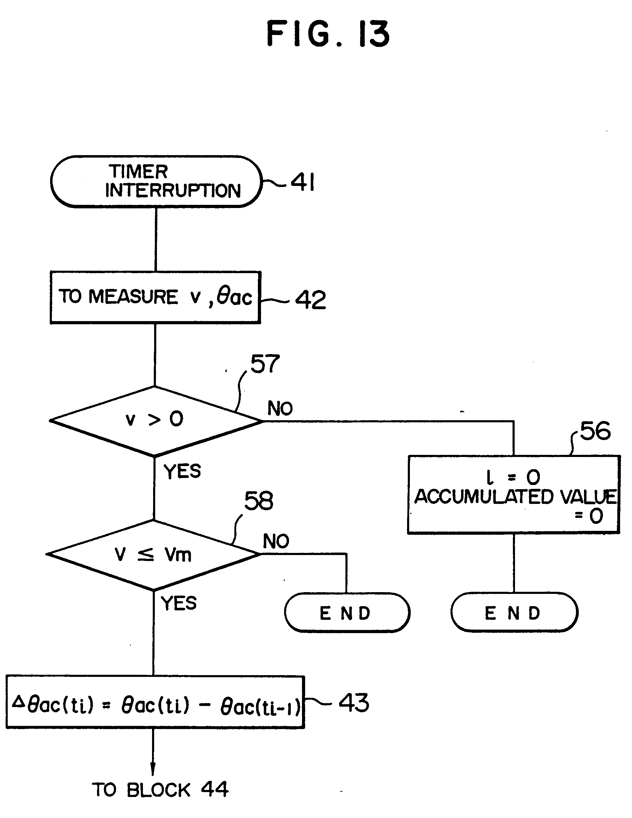

A particular example associated with the driving condition judging unit (blocks 55 and 56) will be described with referenc to Fig. 13 where a start time is selected as a driving condition for discriminating the driver's preference.

First, at block 42, the measuring variables v and $\theta_{ac}$ necessary for judging driving condition are measured.

The blocks 57 and 58 correspond to block 55 of Fig. 12. The vehicle speed v is judged at block 57 as to whether it is positive or not. If v = 0, initial values ($\ell$ = 0, accumulated value = 0) are set at block 56 and the process terminates. If it is judged v > 0, it is judged at block 58 as to whether v > vm or not. If v > vm, the process terminates. If v ≦ vm, the flow advances to block 43. Thus, at the start condition, i.e., vm ≧ v > 0, the process at block 43 and succeeding blocks is performed to discriminate the driving condition (preference). To discriminate the preference during the period while the driving condition is at the start thereof, the change ratio $\Delta\theta_{ac}$ of $\theta_{ac}$ is calculated at block 43. Namely, a difference $\Delta\theta_{ac}(ti) = \theta_{ac}(ti) - \theta_{ac}(ti-1)$ between the present measured value $\theta_{ac}(ti)$ and the preceding measured value $\theta_{ac}(ti-1)$ is calculated.

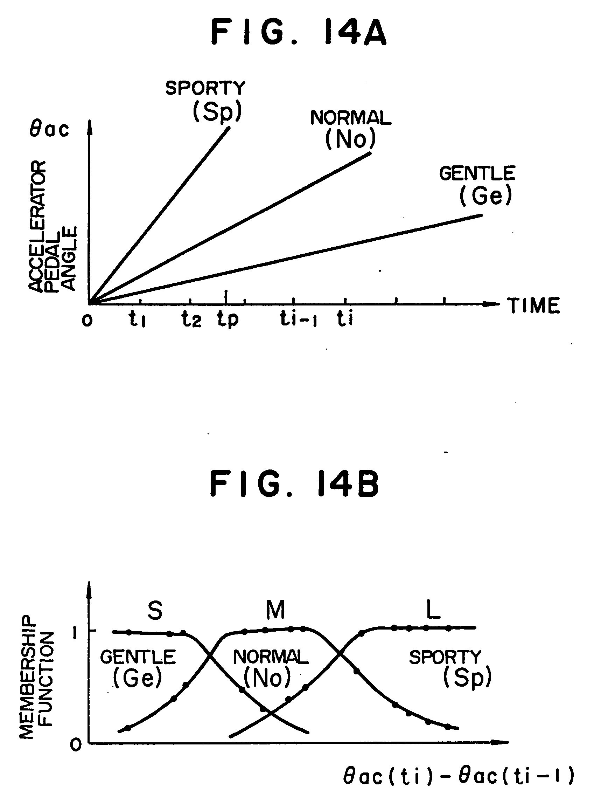

The manner a driver depresses the accelerator pedal at the start of driving has been studied and is shown in Fig. 14A. A driver with "Sporty (Sp)" preference abruptly accelerates, and a driver with "Gentle (Ge)" preference slowly accelerates. A driver with "Normal (No)" preference depresses the pedal in the normal manner.

Thus, as the measured values $\Delta\theta_{ac}(ti)$ are applied to membership functions, the membership function values are obtained from the values $\theta_{ac}$ measured a plurality of times as shown in Fig. 14B (block 44 in Fig. 12).

A judgement at block 46 as to whether $\ell$ = $\ell$x is incorporated in this embodiment to check only the driving condition at the start thereof without checking the other normal running conditions after the start of driving. In other words, checked are only those values $\Delta\theta_{ac}$ until a predetermined time lapse after the start of driving. Using the membership functions, the process at blocks 45 and 49 shown in Fig. 12 is sequentially performed. In this embodiment, since the measuring variable (i) is $\Delta\theta_{ac}$ alone, the calculation at block 51 is made by Dji = Mjk•Fki.

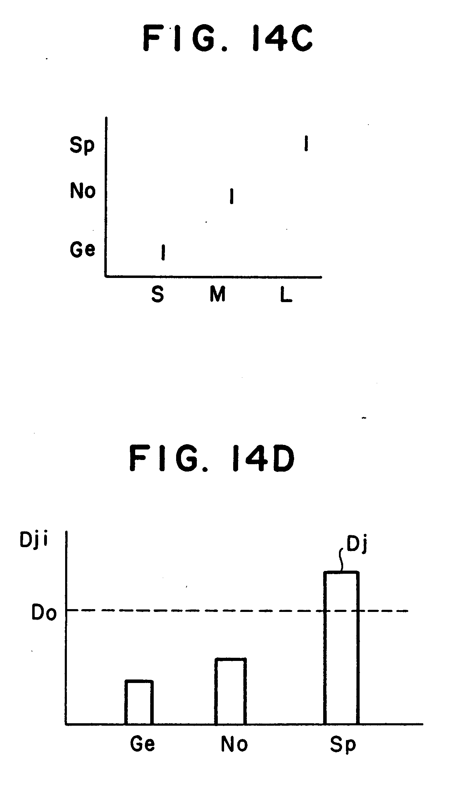

Fig. 14C shows an example of the conversion matrix Mjk of this embodiment.

Fig. 14D shows an example of the values Dji for a driving condition (preference) obtained at block 52.

The driver's preference is discriminated based on the values Dji obtained for each condition (preference: Sp, No and Ge).

In particular, the condition (j) whose value Dji exceeded a predetermined threshold value Do is determined as the driver's preference. Namely, the value Dj is determined as the value of Dji for "Sporty (Sp) (block 52).

At block 53, the driving characteristics may be changed in accordance with the determined result. In this embodiment, however, the method described below is used.

In particular, at block 53, the driving condition variable is stepwise changed as in the following in accordance with the determined result.

If the driving condition is determined as Sp, the next condition variable is selected as No in case where the present condition variable is Ge, Sp for the present condition variable No, and Sp for the present condition variable Sp.

If it is determined as Ge, No is selected in case where the present condition variable is Sp, Ge for the present condition variable No, and Ge for the present condition variable Ge.

The process is performed in the similar manner as described with block 53 of the second embodiment, using the value Dj thus changed.

The present invention may be arranged in the following as modifications of the above embodiments.

Even in the case where the driving condition is not the transition condition but the normal running, the engine control can be conducted in the similar manner to the above embodiments in accordance with the driver's preference. For instance, the engine speed change ratio $\Delta N$ relative to the accelerator pedal motion $\theta_{ac}$ is measured during the normal running to adjust the repulsion force of the accelerator pedal. For instance, for a driver whose accelerator pedal action is likely to cause an overshoot of the engine speed, the repulsion force adjustment function is controlled so as to reduce the repulsion force.

For a driver who often performs racing of a manual transmission (MT) vehicle, the repulsion force adjustment function may be controlled so as to change the condition variable to "Sporty" mode.

The above-described discrimination of a driver's preference has been conducted mainly relying upon the motion of the accelerator pedal. By using the motion of the brake pedal as well, the following discrimination adjustment is possible.

For a driver using an automatic transmission (AT) vehicle without depressing the brake pedal prior to the start at D range, "Gentle" mode is set as the driving condition to avoid possible accident due to an abrupt start. For a driver using an AT (automatic transmittion) vehicle and forcing the vehicle to start while raising the engine speed with both the brake pedal and the accelerator pedal being depressed at a time, "Sporty" mode is set.

According to the synthetic study of the driving actions of a driver as described above, particularly those actions at the acceleration, and according to the classification of the driving conditions into a plurality of driving actions, the correspondence between driving actions and vehicle acceleration characteristics (acceleration patterns) can be ruled as in the following. The acceleration pattern can be characterized by the leading waveform and the acceleration value at the stable state.

(1) Driving Action 1

"Large stroke of quick depression of accelerator pedal at acceleration"

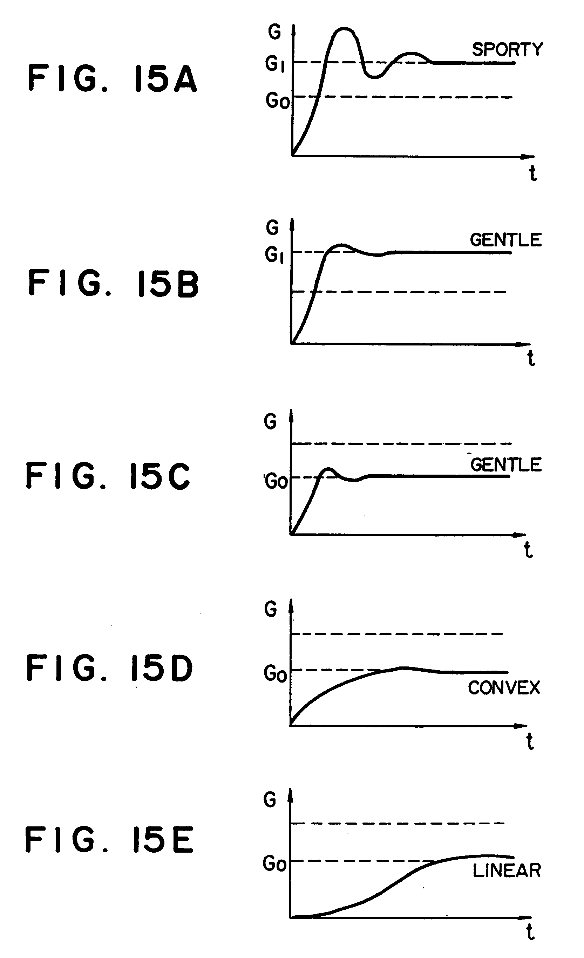

This driving action is often used by young people, and corresponds to the acceleration pattern of: "Sporty (SP)" driving condition, rapid acceleration characteristic pattern as shown in Fig. 15A with a high stable acceleration rate (level G1).

(2) Driving Action 2

"Frequent operations of acceleration pedal, steering wheel, and brake"

This driving action is often seen during a mountain road running, and corresponds to the acceleration pattern of: "Normal (No) driving condition, in some cases rapid acceleration rate characteristic pattern as shown in Fig. 15B with a stable acceleration rate (level G1), and in other cases gentle acceleration rate characteristic pattern as shown in Fig. 15C with a small stable acceleration rate (level G0) which is smaller than G1.

(3) Driving Action 3

"Gradual increase/decrease of accelerator pedal depression with gradual change in vehicle speed"

This driving action is often used by middle and old age people, and corresponds to the acceleration rate pattern of: gradual acceleration rate characteristic pattern as shown in Fig. 15D with a convex waveform.

(4) Driving Action 4

"Frequent operations of accelerator pedal at small opening degree with low vehicle speed"

This driving action corresponds to the acceleration rate pattern of: "Congested (CG)" driving condition, gradual acceleration rate characteristic pattern as shown in Fig. 15E with a linear waveform.

(5) Driving Action 5

"Unsmoothed and choppy depression of accelerator pedal with small fluctuation of vehicle speed"

This driving action is often used by beginners and corresponds to acceleration rate characteristic pattern as shown in Fig. 15E.

According to the fifth embodiment of the present invention, the driver's intents are classified into the above five driving actions, and the acceleration rate characteristic is adjusted so as to match the particular classified intent. Namely, in the similar manner to the above embodiments, the measuring variables including accelerator pedal angle, brake angle, vehicle speed, and etc. are continuously measured. The measured values are processed using membership functions in the similar manner to that described with blocks 43 to 52 shown in Fig. 3 to judge as to which one of the five acceleration rate patterns belongs to a particular driver's intent (driving environment and preference). The judging results are stored in the RAM.

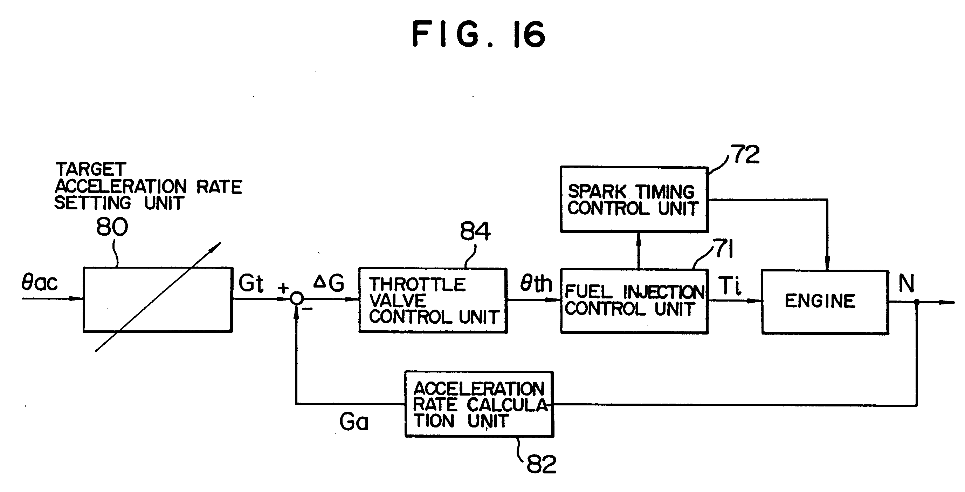

On the other hands, in the ROM of the control unit 10, equations for calculating the five acceleration rate characteristic patterns are beforehand stored. The acceleration rate characteristic patterns as shown in Figs. 15A to 15E can be automatically obtained if drivers with preferences depresses the accelerator pedal to a predetermined angle (e.g., 3/4 $\theta_{ac\ max}$).Fig. 16 is a functional block diagram for explaining the operation of this embodiment. The functions of blocks in Fig. 16 are realized by the control unit 10. A target acceleration rate setting unit 80 calculates the target acceleration rate Gt corresponding to the pattern (one of the five patterns shown in Figs. 15A to 15E) stored in the RAM by using the following equation (7):

$$Gt = \frac{k \cdot \theta_{ac}}{s^2 + 2\zeta\omega_n s + \omega_n^2} \qquad \dots \dots \ (7)$$

The equation (7) is a second order delay transfer function for calculating the target acceleration rate Gt corresponding to $\theta_{ac}$.

The acceleration pattern can be changed in accordance with the adjustment parameter value $\zeta$ of the transfer function. Therefore, the parameter value $\zeta$ corresponding to the acceleration pattern determined through discrimination is given to the equation (7) to calculate the value Gt.

The target acceleration rate Gt is compared with an actual vehicle acceleration rate Ga from an acceleration rate calculation unit 82 to obtain a difference $\Delta G = Gt - Ga$ which is supplied to a throttle valve control unit 84.

The acceleration rate calculation unit 82 calculates the value Ga by the following equation using the difference dN/dt of the engine speed N:

$$Ga = a \cdot \frac{dN}{dt}$$

where a is a value determined by the gear ratio and the like. The acceleration rate Ga may be obtained based on an output signal v from the vehicle speed sensor 12.

The throttle valve control unit 84 reads, for example, from the RAM map the throttle valve opening degree $\theta_{th}$ corresponding to $\Delta G$ to thereby electrically control the throttle valve opening degree at $\theta_{th}$.

The target acceleration rate tracking control may be conducted in the similar manner as described with the above-referenced USP. No. 55,530. In other words, the above-mentioned tracking control can be called as an acceleration rate servo-control.

The five patterns are typical, and other various modified patterns with specific values may be set according to the driver's preferences and characteristics by adjusting the value of $\zeta$ in the equation (7).

As described above, the Fuzzy rule type method is effective in obtaining a correspondence among non-linear characteristics.

According to the present invention, the driver's preference and the running environments of all types can be discriminated with a computer mounted on the vehicle, and the engine characteristic matching the discrimination result can be realized. In other words, the control apparatus mounted on the vehicle makes the driving characteristic to conform with the driver's intent from time to time so that operability is considerably improved as compared with conventional, thereby advantageously ensuring good driveability and comfort riding.

Further, after identifying the driving environment, the driver's feelings/preferences to driveability can be discriminated which match the identified driving environment. Therefore, the driver's preference which differs dependent upon the environment can be reflected upon the engine control characteristics. Thus, it becomes possible to supply a vehicle capable of matching the preferences of various drivers.

Even if a vehicle whose engine characteristics are adjusted to match "Gentle" or "Normal" preference, the engine characteristics can be changed to "Sporty" preference after abrupt accelerator pedal depression, thus avoiding possible danger.

Various engine characteristics can be obtained which match specific time, location, and opportunity, as compared with conventional, thus making various types of drivers to be satisfied with them.

If a driver does not desire a change in the driving characteristics, a selection switch of the driving characteristics may be fixed to obtain such effect. Also, specific driving characteristics may be selected by the selection switch.

## Claims

1. An electronic engine control apparatus for a vehicle, comprising:
   a plurality of first sensors (1 - 8) detecting the action of a driver of the vehicle;
   a plurality of second sensors (9, 12, 13) detecting the operating condition of the vehicle and the engine;
   a plurality of actuators controlling the engine;
   and means (10) controlling the engine by adjusting the actuators in response to the signals of said sensors (1 -8 and 9, 12, 13),
   wherein said controlling means (10) comprises means discriminating the driver's intent of how to drive the vehicle on the basis of the output signals of said first and second sensors (1 - 8 and 9, 12, 13) by calculating the occurrence frequency at which the output signal of a sensor (1 - 8 and 9, 12, 13) lies within predetermined ranges ("small", "middle", "large"), and
   wherein said controlling means (10) modifies the control signals for said actuators in accordance with said calculated frequency.

2. An electronic engine control apparatus according to claim 1, wherein said discrimination means (10) classifies the driver's intents into a plurality of types in accordance with the driving environments of the vehicle and/or the driver's preference to driveability, and discriminates to what type the driver's intent belongs, in accordance with the output signals from said first and second sensors.

3. An electronic engine control apparatus according to claim 1, wherein said discrimination means measures the output signals from said first and second sensors a plurality of times during a plurality of engine cycles, and discriminates to what type the driver's intent belongs, in accordance with said measured values.

4. An electronic engine control apparatus according to claim 3, wherein said discrimination means (10) classifies the driver's intents with respect to the driving environments of the vehicle into a congested road, an urban street, a suburban road, a mountain road and a highway, and discriminates to what type the driving environment of the vehicle belongs, in accordance with the output signals from said first and second sensors.

5. An electronic engine control apparatus according to claim 4, wherein said second sensors include a vehicle speed sensor (12) for detecting a vehicle speed, an engine speed sensor (9) for detecting the engine speed, and a throttle valve position sensor for detecting the opening degree of a throttle valve (7), and wherein
   said discrimination means discriminates to what type the driving environment of a vehicle belongs, in accordance with output signals from said vehicle speed sensor, engine speed sensor and throttle valve position sensor.

16

6.  An electronic engine control apparatus according to claim 5, wherein said discrimination means (10) calculates an engine speed change ratio using the output signal from said engine speed sensor, further calculates a throttle valve opening degree change ratio using the output signal from said throttle valve position sensor, and classifies the obtained vehicle speed, engine speed change ratio and throttle valve opening degree change ratio into large, middle and small, and wherein

    said discrimination means discriminates the driving environment as a highway if the vehicle speed is high, as a congested road if the vehicle speed is low and the engine acceleration is small, as a mountain road if the throttle valve opening degree change ratio and the engine speed change ratio are large, and as an urban street if the vehicle speed and the engine speed change ratio take intermediate values.

7.  An electronic engine control apparatus according to claim 4, wherein said discrimination means (10) comprises:

    a unit calculating the occurrence frequencies of the large, middle and small types of each output signal value by applying membership functions of the Fuzzy theory to the output signals of said first and second sensors;

    a unit obtaining the occurrence probability of each driving environment by performing a conversion matrix calculation from the occurrence frequencies of the large, middle and small types of each output signal into the driving environments; and

    a unit discriminating an objective driving environment which has maximum occurrence probability among the driving environments.

8.  An electronic engine control apparatus according to claim 4, wherein said first sensors include a gear shift sensor (8) for detecting a gear shift by a shift lever, a brake sensor (5) for detecting a depression of a brake pedal, an accelerator pedal sensor (4) for detecting a depression of an accelerator pedal, and a steering sensor (6) for detecting a motion of a steering, and said second sensors include a vehicle speed sensor (12) for detecting a vehicle speed and wherein

    said discrimination means classifies the frequency of the gear shift, the frequency of the steering, the frequency of the brake depression and the frequency of the accelerator pedal depression into large, middle and small types, respectively, in accordance with the output signals from said first and second sensors, classifies the vehicle speed into large, middle and small types, and discriminates the driving environments based on the classification result.

9.  An electronic engine control apparatus according to claim 8, wherein said discrimination means (10) discriminates the driving environment as a highway running if the vehicle speed is high and the frequency of the gear shift is large, and as a congested road running if the vehicle speed is low and the frequency of the brake pedal depression is high.

10. An electronic engine control apparatus according to claim 8, wherein said discrimination means (10) discriminates the driving environment as a suburban road running if the vehicle speed is maintained near a limited speed and the frequency and range of the steering motion are small.

11. An electronic engine control apparatus according to claim 8, wherein said discrimination means (10) discriminates the driving environment as an urban street running if both the frequencies of the steering motion and the brake actuation are high.

12. An electronic engine control apparatus according to claim 8, wherein said discrimination means (10) discriminates the driving environment as a mountain road running if both the frequencies of the steering motion and the depression change between the brake and accelerator pedals are large.

13. An electronic engine control apparatus according to claim 4, wherein one of said plurality of actuators is a fuel injection valve (14), and wherein

    said control means controls said fuel injection valve in such a manner that the ratio of an injected fuel amount to a sucked air amount increases relatively with the respective driving environments of the congested road, urban street, mountain road and highway in this order.

14. An electronic engine control apparatus according to claim 4, wherein one of said plurality of actuators is an ignition plug (15), and wherein

said control means controls said ignition plug in such a manner that the ignition timings advance relatively with the respective driving environments of the congested road, urban street, mountain road and highway in this order.

**15.** An electronic engine control apparatus according to claim 4, wherein one of said plurality of actuators is a means (17, 18, 19, 61, 63, 66) adjusting a repulsion force of an accelerator pedal, and wherein
said control means controls said repulsion force adjusting means in such a manner that the repulsion forces reduce relatively with the respective driving environments of the congested road, urban street, mountain road and highway in this order.

**16.** An electronic engine control apparatus according to claim 4, wherein one of said plurality of actuators is a means (70) controlling a throttle valve opening degree through conversion of the depression angle of an accelerator pedal into the throttle valve opening degree, and wherein
said control means controls said throttle valve opening degree controlling means (70) in such a manner that conversion ratios from the accelerator pedal depression angle into the throttle valve opening degree increase relatively with the respective driving environments of the congested road, urban street, mountain road, and highway in this order.

**17.** An electronic engine control apparatus according to claim 3, wherein said discrimination means (10) classifies the driver's intents with respect to the driver's preference to driveability into sporty, normal and gentle types, and discriminates to what type the driver's preference belongs, in accordance with the output signals from said first and second sensors.

**18.** An electronic engine control apparatus according to claim 17, wherein said second sensors include an engine speed sensor (9) for detecting the engine speed, and a throttle valve position sensor for detecting the opening degree of a throttle valve (7), and wherein
said discrimination means (10) discriminates to what type the driver's preference belongs, in accordance with output signals from said engine speed sensor and throttle valve position sensor.

**19.** An electronic engine control apparatus according to claim 18, wherein said discrimination means (10) calculates an engine speed change ratio using the output signal from said engine speed sensor, further calculates a throttle valve opening degree change ratio using the output signal from said throttle valve position sensor, and classifies the obtained engine speed change ratio and throttle valve opening degree change ratio into large, middle and small, and wherein
said discrimination means discriminates the driver's intention as the sporty type if the engine speed change ratio, throttle valve opening degree, and throttle valve opening degree change ratio are large, as the normal type if they are middle, and as the gentle type if they are small.

**20.** An electronic engine control apparatus according to claim 17, wherein said discrimination means (10) comprises:
a unit calculating the occurrence frequencies of the large, middle and small types of each output signal value by applying membership functions of the Fuzzy theory to the output signals of said first and second sensors;
a unit obtaining the occurrence probability of each driver's preference by performing a conversion matrix calculation from the occurrence frequencies of the large, middle and small types of each output signal into the driver's preferences; and
a unit discriminating an objective driver's preference which has maximum occurrence probability among the driver's preferences.

**21.** An electronic engine control apparatus according to claim 17, wherein said first sensors include a sensor (4) detecting the depression angle of an accelerator pedal, and wherein
said discrimination means discriminates the preferences as the sporty type if the driver abruptly depresses the accelerator pedal.

**22.** An electronic engine control apparatus according to claim 17, wherein said first sensors include a sensor (4) detecting the depression position of the accelerator pedal, and a sensor (5) detecting the depression position of the brake pedal, and wherein
said discrimination means (10) discriminates the preferences to driveability based on the depres-

18

sions and depression frequencies of the accelerator and brake pedals.

23. An electronic engine control apparatus according to claim 17, wherein said first sensors include a sensor (4) detecting the depression position of the accelerator pedal, a sensor (5) detecting a depression position of the brake pedal, and a sensor (8) detecting the gear position of a shift lever,

said second sensors include a sensor (12) detecting the vehicle speed, and a sensor (9) detecting the engine speed, and

said discrimination means discriminates the driver's preferences based on the output signals from said first and second sensors.

24. An electronic engine control apparatus according to claim 17, wherein one of said plurality of actuators is a fuel injection valve (14), and wherein

said control means controls said fuel injection valve in such a manner that the ratio of the injected fuel amount to the sucked air amount increase relatively with the respective driver's preferences of the gentle, normal and sporty types in this order.

25. An electronic engine control apparatus according to claim 17, wherein one of said plurality of actuators is an ignition plug (15), and wherein

said control means controls said ignition plug in such a manner that the ignition timings advance relatively at said respective driver's preferences of the gentle, normal and sporty types in this order.

26. An electronic engine control apparatus according to claim 17, wherein one of said plurality of actuators is a means (17, 18, 19, 61, 63, 66) adjusting a repulsion force of the accelerator pedal, and wherein

said control means controls said repulsion force adjusting means in such a manner that the repulsion forces reduce relatively with the respective driver's preferences of the gentle, normal and sporty types in this order.

27. An electronic engine control apparatus according to claim 17, wherein one of said plurality of actuators is a means (70) controlling a throttle valve opening degree through conversion of the depression angle of the accelerator pedal into the throttle valve opening degree, and wherein

said control means controls said throttle valve opening degree controlling means (70) in such a manner that the conversion ratio from the accelerator pedal depression angle into the throttle valve opening degree increase relatively with the respective driver's preferences of the gentle, normal and sporty types in this order.

28. An electronic engine control apparatus according to claim 17, wherein said discrimination means (10) detects a transition condition of the driving condition based on the output signals from said first and second sensors, and discriminates the driver's preferences based on the output signals from said first and second sensors during the transition condition.

29. An electronic engine control apparatus according to claim 28, wherein said discrimination means (10) detects a driving start as said transition condition, calculates an accelerator pedal depression position change ratio based on an output signal of an accelerator pedal depression position sensor as a first sensor, and discriminates the driver's preferences based on the depression position change ratio at the driving start.

30. An electronic engine control apparatus according to claim 29, wherein said discrimination means (10) classifies the accelerator pedal depression change ratio into large, middle and small types, and discriminates the driver's preferences as the sporty, normal and gentle types if the change ratio is large, middle and small, respectively.

31. An electronic engine control apparatus according to claim 3, wherein said discrimination means (10) classifies the driver's intent into a plurality of types in accordance with the driving environments of the vehicle and the driver's preferences to driveability, and discriminates to what type the driver's intent belongs, in accordance with the output signals from said first and second sensors.

32. An electronic engine control apparatus according to claim 31, wherein said discrimination means (10) classifies the driving environments into a highway, congested road and other driving environments, and further classifies the other driving environments into the driver's preferences of sporty, normal and gentle types.

33. An electronic engine control apparatus according to claim 32, wherein said second sensors include a vehicle speed sensor (12) for detecting a vehicle speed, an engine speed sensor (9) for detecting the engine speed, and a throttle valve position sensor (14) for detecting the opening degree of the throttle valve, and wherein

said discrimination means (10) discriminates to what type the driving environment belongs, in accordance with the output signals from said vehicle speed sensor, engine speed sensor and throttle valve position sensor.

34. An electronic engine control apparatus according to claim 33, wherein said discrimination means (10) calculates an engine speed change ratio using the output signal from said engine speed sensor, further calculates a throttle valve opening degree change ratio using the output signal from said throttle valve position sensor, and classifies the obtained vehicle speed, engine speed change ratio and throttle valve opening degree change ratio into large, middle and small, and wherein

said discrimination means discriminates the driving environment as the highway if the vehicle speed is high, as the congested road if the vehicle speed is low and the engine speed change ratio is small, and

said discrimination means discriminates the driver's intention as sporty if the engine speed change ratio, the throttle valve opening degree and the throttle valve opening degree change ratio are large, as normal if they are middle, and as gentle if they are small.

35. An electronic engine control apparatus according to claim 31, wherein said discrimination means (10) comprises:

a unit calculating the occurrence frequencies of the large, middle and small types of each output signal value by applying membership functions of the Fuzzy theory to the output signals of said first and second sensors;

a unit obtaining the occurrence probability of each driving environment and each driver's preference by performing a conversion matrix calculation from the occurrence frequencies of the large, middle and small types of each output signal into the driving environments and the driver's preferences; and

a unit discriminating an objective driving environment and an objective driver's preference which have maximum occurrence probabilities among the driving environments and the driver's preferences, respectively.

36. An electronic engine control apparatus according to claim 32, wherein one of said plurality of actuators is a fuel injection valve (14), and wherein

said control means sets a first air/fuel mixture ratio if the driving environment is the congested road or the driver's preference is the gentle type, a second air/fuel mixture ratio if the driver's preference is the normal type, and a third air/fuel mixture ratio if the driving environment is the highway or the driver's preference is the sporty type, and controls the fuel injection valve in such a manner that the mixture ratios increase relatively with the respective mixture ratios of the first, second and third ratios in this order.

37. An electronic engine control apparatus according to claim 32, wherein one of said plurality of actuators is an ignition plug (15), and wherein

said control means sets first spark timings if the driving environment is the congested road or the driver's preference is the gentle type, second spark timings if the driver's preference is the normal type, and third spark timings if the driving environment is the highway or the driver's preference is the sporty type, and controls the ignition plug in such a manner that the spark timings advance relatively with the first, second and third spark timings in this order.

38. An electronic engine control apparatus according to claim 32, wherein one of said plurality of actuators is a means (17, 18, 19, 61, 63, 66) adjusting a repulsion force of the accelerator pedal, and wherein

said control means sets a first repulsion force if the driving environment is the congested road or the driver's preference is the gentle type, a second repulsion force if the driver's preference is the normal type, and a third repulsion force if the driving environment is the highway or the driver's preference is the sporty type, and controls said repulsion force adjusting means in such a manner that the accelerator pedal repulsion force reduces relatively with the first, second and third repulsion forces in this order.

39. An electronic engine control apparatus according to claim 32, wherein one of said plurality of actuators is a means (70) controlling a throttle valve opening degree through conversion of the depression angle of an accelerator pedal into the throttle valve opening degree, and wherein

said control means sets a first conversion ratio of the accelerator pedal depression angle into the throttle valve opening degree if the driving environment is the congested road or the driver's preference is the gentle type, a second conversion ratio if the driver's preference is the normal type, and a third conversion ratio if the driving environment is the highway or the driver's preference is the sporty type, and controls said throttle valve opening degree controlling means (70) in such a manner that the conversion ratios increase relatively with the first, second and third conversion ratios in this order.

40. An electronic engine control apparatus according to claim 3, wherein said discrimination means (10) classifies the driver's intents with respect to the driving action of the driver in acceleration periods into a plurality of acceleration characteristic patterns, and discriminates to what acceleration characteristic pattern the driver's intent belongs, based on the output signals from said first and second sensors, and wherein

said control means includes an acceleration rate controlling mechanism and changes the coefficient of said acceleration rate controlling mechanism in accordance with the discriminated acceleration characteristic pattern.

41. An electronic engine control apparatus according to any one of the preceding claims, wherein said discriminating means (10) calculates the aforesaid frequency over a predetermined evaluation time.

## Patentansprüche

1. Elektronische Motorsteuerungsvorrichtung für ein Fahrzeug, umfassend:

eine Vielzahl erster Sensoren (1-8), die die Tätigkeit eines Fahrers des Fahrzeugs erkennen;

eine Vielzahl zweiter Sensoren (9, 12, 13), die die Betriebsbedingung des Fahreugs und des Motors erkennen;

eine Vielzahl von Betätigungsgliedern, die den Motor steuern; und

einer Einrichtung (10), die den Motor durch Stellen der Betätigungglieder in Antwort auf die Signale der genannten Sensoren (1-8 und 9, 12, 13) steuert,

wobei die genannte Steuereinrichtung (10) eine Einrichtung aufweist, die auf der Grundlage der Ausgangssignale der ersten und zweiten Sensoren (1-8 und 9, 12, 13) die Absichten des Fahrers, wie das Fahrzeug gefahren werden soll, unterscheidet, indem die Häufigkeit, die das Ausgangssignal eines Sensors (1-8 und 9, 12, 13) innerhalb vorbestimmter Bereiche ("klein", "mittel", "groß") liegt, berechnet wird, und

wobei die Steuereinrichtung (10) die Steuersignale für die Betätigungsglieder entsprechend den berechneten Häufigkeiten ändert.

2. Vorrichtung nach Anspruch 1, wobei die Unterscheidungseinrichtung (10) die Absichten des Fahrers entsprechend der Fahr-Umgebung des Fahrzeugs und/oder der vom Fahrer bevorzugten Fahrweise in eine Vielzahl von Typen einteilt und entsprechend den Ausgangssignalen der ersten und zweiten Sensoren feststellt, zu welchem Typ die Absicht des Fahrers gehört.

3. Vorrichtung nach Anspruch 1, wobei die Unterscheidungseinrichtung die Ausgangssignale der ersten und zweiten Sensoren mehrfach innerhalb einer Vielzahl von Motorzyklen mißt und entsprechend den gemessenen Werten unterscheidet, zu welchem Typ die Absicht des Fahrers gehört.

4. Vorrichtung nach Anspruch 3, wobei die Unterscheidungseinrichtung die Absicht des Fahrers entsprechend der Fahr-Umgebung des Fahrzeugs in die Klassen verstopfte Straße, Stadtstraße, Vorstadtstraße, Bergstraße und Landstraße einteilt und entsprechend den Ausgangssignalen der ersten und zweiten Sensoren unterscheidet, zu welchem Typ die Fahr-Umgebung des Fahrzeugs gehört.

5. Vorrichtung nach Anspruch 4, wobei die zweiten Sensoren einen Fahrzeug-Geschwindigkeitssensor (12) zum Feststellen der Fahrzeuggeschwindkigkeit, einen Motordrehzahl-Sensor (9) zum Feststellen der Motordrehzahl und einen DrosselklappenPositionssensor zum Feststellen des Öffnungsgrades der Drosselklappe (7) umfassen und wobei

die Unterscheidungseinrichtung entsprechend der Ausgangssignale des Fahrzeug-Geschwindigkeitssensors, des Motor-Drehzahlsensors und des Drosselklappen-Positionssensors unterscheidet, zur welchem Typ die Fahr-Umgebung des Fahrzeugs gehört.

6. Vorrichtung nach Anspruch 5, wobei die Unterscheidungseinrichtung (10) unter Verwendung des Ausgangssignals des Motordrehzahl-Sensors ein Motordrehzahl-Änderungsverhältnis und unter Verwendung des Ausgangssignals des Drosselklappen-Positionssensors ein Drosselklappen-Öffnungsgrad-Änderungsverhältnis berechnet und die erhaltene Fahrzeuggeschwindigkeit, das Motordrehzahl-Änderungsverhältnis und das DrosselklappenÖffnungsgrad-Änderungsverhältnis in die Klassen groß, mittel und klein einteilt, und wobei

die Unterscheidungseinrichtung die Fahr-Umgebung, wenn die Fahrzeuggeschwindigkeit groß ist, als Landstraße, wenn die Fahrzeuggeschwindigkeit niedrig und die Motorbeschleunigung klein ist, als verstopfte Straße, wenn das Drosselklappen-Öffnungsgrad-Änderungsverhältnis und das Motordrehzahl-Änderungsverhältnis groß ist, als Bergstraße und, wenn die Fahrzeuggeschwindigkeit und das Motordrehzahl-Änderungsverhältnis mittelgroße Werte annehmen, als Stadtstraße erkennt.

7. Vorrichtung nach Anspruch 4, wobei die Unterscheidungseinrichtung (10) umfaßt:

eine Einrichtung, die die Häufigkeit der Typen groß, mittel und klein des Wertes jedes Ausgangssignals durch Anwenden von Mitglieds-Funktionen (membership functions) der Fuzzy-Theorie auf die Ausgangssignale der ersten und zweiten Sensoren berechnet;

eine Einrichtung, die die Auftretungswahrscheinlichkeit für jede Fahr-Umgebung durch Durchführung einer Matrix-Umwandlungsberechnung der Häufigkeiten der Typen groß, mittel und klein jedes Ausgangssignals in die Fahr-Umgebungen erhält, und

eine Einrichtung, die unter den Fahr-Umgebungen eine objektive Fahr-Umgebung, die die maximale Auftretungswahrscheinlichkeit aufweist, erkennt.

8. Vorrichtung nach Anspruch 4, wobei die ersten Sensoren einen Gangschaltungs-Sensor (8) zum Erkennen eines Schaltvorgangs mittels des Schalthebels, einen Brems-Sensor (5) zum Feststellen des Niederdrückens des Bremspedals, einen Gaspedal-Sensor zum Feststellen des Niederdrückens des Gaspedals und einen Lenkrad-Sensor (6) zum Feststellen einer Bewegung des Lenkrads aufweisen, und wobei die zweiten Sensoren einen Fahrzeug-Geschwindigkeitssensor (12) zum Feststellen der Fahrzeuggeschwindigkeit aufweisen, und

wobei die Unterscheidungseinrichtung die Schaltfrequenz, die Schalthäufigkeit, die Steuerfrequenz, die Häufigkeit der Betätigung der Bremse und die Häufigkeit des Drückens des Gaspedals entsprechend der Ausgangssignale der ersten und zweiten Sensoren jeweils in die Typen groß, mittel und klein einteilt, die Fahrzeuggeschwindigkeit in die Typen groß, mittel und klein einteilt, und die Fahr-Umgebung auf der Grundlage des Einteilungsergebnisses feststellt.

9. Vorrichtung nach Anspruch 8, wobei die Unterscheidungseinrichtung (10) die Fahr-Umgebung, wenn die Fahrzeuggeschwindigkeit hoch und die Schaltfrequenz groß ist, als Bergstraßenfahrt und, wenn die Fahrzeuggeschwindigkeit niedrig und die Häufigkeit der Bremsbetätigung hoch ist, als Fahrt auf einer verstopften Straße feststellt.

10. Vorrichtung nach Anspruch 8, wobei die Unterscheidungseinrichtung (10) die Fahr-Umgebung als Vorstadtstraßen-Fahrt feststellt, wenn die Fahrzeuggeschwindigkeit in der Nähe einer Grenzgeschwindigkeit bleibt und die Häufigkeit und der Bereich der Steuerbewegung klein sind.

11. Vorrichtung nach Anspruch 8, wobei die Unterscheidungseinrichtung (10) die Fahr-Umgebung als Stadtstraßen-Fahrt erkennt, wenn die Häufigkeit sowohl der Steuerbewegung als auch der Bremsbetätigung hoch ist.

12. Vorrichtung nach Anspruch 8, wobei die Unterscheidungseinrichtung (10) die Fahr-Umgebung als Bergstraßen-Fahrt erkennt, wenn die Häufigkeit sowohl der Steuerbewegung als auch des Betätigungswechsels zwischen Bremse und Gaspedal groß ist.

13. Vorrichtung nach Anspruch 4, wobei eines der Vielzahl von Betätigungsgliedern ein Kraftstoff-Einspritzventil ist, und wobei

die Steuereinrichtung das Kraftstoff-Einspritzventil so steuert, daß das Verhältnis der eingespritzten Kraftstoffmenge zur angesaugten Luftmenge entsprechend der Fahr-Umgebung der verstopften Straße, der Stadtstraße, der Bergstraße und der Landstraße in dieser Reihenfolge zunimmt.

14. Vorrichtung nach Anspruch 4, wobei eines der Vielzahl von Betätigungsgliedern eine Zündkerze (15) ist, und wobei

die Steuereinrichtung die Zündkerze so steuert, daß die Zündzeitpunkte entsprechend der Fahr-Umgebung der verstopften Straße, der Stadtstraße, der Bergstraße und der Landstraße in dieser Reihenfolge relativ zueinander vorgehen.

15. Vorrichtung nach Anspruch 4, wobei eines der Vielzahl von Betätigungsgliedern eine Einrichtung (17, 18, 19, 61, 63, 66) ist, die die Gegenkraft des Gaspedals einstellt, und wobei

die Steuereinrichtung die die Gegenkräfte einstellende Einrichtung so steuert, daß die Gegenkraft entsprechend der Fahr-Umgebung der verstopften Straße, der Stadtstraße, der Bergstraße und der Landstraße in dieser Reihenfolge relativ zueinander abnehmen.

16. Vorrichtung nach Anspruch 4, wobei eines der Vielzahl von Betätigungsgliedern eine Einrichtung (70) ist, die einen Drosselklappen-Öffnungsgrad durch Umwandeln des Winkels, den das Gaspedal niedergedrückt ist, in den Drosselklappen-Öffnungsgrad steuert, und wobei

die Steuereinrichtung die Steuereinrichtung (70) für den Drosselklappen-Öffnungsgrad so steuert, daß die Umwandlungsverhältnisse von dem Winkel, den das Gaspedal niedergedrückt ist, in den Drosselklappen-Öffnungsgrad entsprechend der Fahr-Umgebung der verstopften Straße, der Stadtstraße, der Bergstraße und der Landstraße in dieser Reihenfolge relativ zunehmen.

17. Vorrichtung nach Anspruch 3, wobei die Unterscheidungseinrichtung (10) die Absicht des Fahrers entsprechend der vom Fahrer bevorzugten Fahrweise in die Typen sportlich, normal und behutsam einteilt und entsprechend der Ausgangssignale der ersten und zweiten Sensoren unterscheidet, zu welchem Typ die bevorzugte Art des Fahrers gehört.

18. Vorrichtung nach Anspruch 17, wobei die zweiten Sensoren einen Motordrehzahl-Sensor (9) zum Feststellen der Motordrehzahl und einen Drosselklappen-Positionssensor zum Feststellen des Öffnungsgrads der Drosselklappe (7) umfassen, und wobei

die Unterscheidungseinrichtung (10) entsprechend der Ausgangssignale von dem Motordrehzahl-Sensor und dem Drosselklappen-Positionssensor unterscheidet, zu welchem Typ die Vorliebe des Fahrers gehört.

19. Vorrichtung nach Anspruch 18, wobei die Unterscheidungseinrichtung (10) unter Verwendung des Ausgangssignals des Motordrehzahl-Sensors ein Motordrehzahl-Änderungsverhältnis und unter Verwendung des Ausgangssignals des Drosselklappen-Positionssensors ein Drosselklappen-Öffnungsgrad-Änderungsverhältnis berechnet, und das erhaltene Motordrehzahl-Änderungsverhältnis und Drosselklappen-Öffnungsgrad-Änderungsverhältnis in groß, mittel und klein einteilt, und wobei

die Unterscheidungseinrichtung die Absicht des Fahrers, wenn das Motordrehzahl-Änderungsverhältnis, der Drosselklappen-Öffnungsgrad und das Drosselklappen-Öffnungsgrad-Wechselverhältnis groß sind, als sportlicher Typ, wenn sie mittelgroß sind, als normaler Typ und, wenn sie klein sind, als behutsamer Typ erkennt.

20. Vorrichtung nach Anspruch 17, wobei die Unterscheidungs-Einrichtung (10) umfaßt:

eine Einrichtung, die durch Anwenden von Mitsgliedsfunktionen (membership functions) der Fuzzy-Theorie auf die Ausgangssignale der ersten und zweiten Sensoren die Häufigkeiten des großen, mittleren und kleinen Typs für jeden der Ausgangssignalwerte berechnet;

eine Einrichtung, die mittels Durchführung einer Matrix-Umwandlungsberechnung aus den Häufigkeiten des großen, mittleren und kleinen Typs jedes der Ausgangssignale in die Vorlieben des Fahrers die Auftretungswahrscheinlichkeit jeder der Vorlieben des Fahrers ermittelt; und

eine Einrichtung, die unter den Vorlieben des Fahrers die objektive Vorliebe des Fahrers erkennt, die die größte Auftretungswahrscheinlichkeit aufweist.

EP 0 304 089 B1

21. Vorrichtung nach Anspruch 17, wobei die ersten Sensoren einen Sensor (4) aufweisen, der den Winkel, um den das Gaspedal niedergedrückt ist, erkennt, und wobei
die Unterscheidungseinrichtung die Vorliebe als den sportlichen Typ erkennt, wenn der Fahrer das Gaspedal plötzlich niederdrückt.

22. Vorrichtung nach Anspruch 17, wobei die ersten Sensoren einen Sensor (4), der die Position, zu der das Gaspedal niedergedrückt ist, erkennt und einen Sensor (5), der die Position, zu der das Bremspedal niedergedrückt ist, erkennt, aufweisen, und wobei
die Unterscheidungseinrichtung (10) aufgrund des Niederdrückens und der Niederdrückungshäufigkeit des Gaspedals und des Bremspedals die Vorlieben in Bezug auf die Fahrweise unterscheidet.

23. Vorrichtung nach Anspruch 17, wobei die ersten Sensoren einen Sensor (4), der die Position, zu der das Gaspedal niedergedrückt ist, erkennt, einen Sensor (5), der die Position, zu der das Bremspedal niedergedrückt ist, erkennt, einen Sensor (8), der die Gangposition des Schalthebels erkennt, aufweisen, wobei
die zweiten Sensoren einen Sensor (12), der die Fahrzeuggeschwindigkeit erkennt, und einen Sensor (9), der die Motordrehzahl erkennt, aufweisen, und wobei
die Unterscheidungseinrichtung auf der Grundlage der Ausgangssignale der ersten und zweiten Sensoren die Vorlieben des Fahrers unterscheidet.

24. Vorrichtung nach Anspruch 17, wobei eines der Vielzahl von Betätigungsgliedern ein Kraftstoff-Einspritzventil (14) ist, und wobei
die Steuereinrichtung das Kraftstoff-Einspritzventil so steuert, daß das Verhältnis der eingespritzten Kraftstoffmenge zur angesaugten Luftmenge entsprechend der Vorliebe des Fahrers vom behutsamen, normalen und sportlichen Typ in dieser Reihenfolge ansteigt.

25. Vorrichtung nach Anspruch 17, wobei eines der Vielzahl von Betätigungsgliedern eine Zündkerze (15) ist, und wobei
die Steuereinrichtung die Zündkerze so steuert, daß die Zündzeitpunkte entsprechend der Vorliebe des Fahrers des behutsamen Typs, des normalen Typs und des sportlichen Typs in dieser Reihenfolge relativ zueinander vorgehen.

26. Vorrichtung nach Anspruch 17, wobei eines der Vielzahl von Betätigungsgliedern eine Einrichtung (17, 18, 19, 61, 63, 66) ist, die die Gegenkraft des Gaspedals einstellt, und wobei
die Steuereinrichtung die Einrichtung zur Einstellung der Gegenkraft so steuert, daß sich die Gegenkräfte entsprechend der Vorliebe des Fahrers von dem behutsamen, dem normalen und dem sportlichen Typ in dieser Reihenfolge relativ zueinander reduzieren.

27. Vorrichtung nach Anspruch 17, wobei eines der Betätigungsglieder eine Einrichtung (70) ist, die durch Umwandeln des Winkels, den das Gaspedal niedergedrückt ist, in den Drosselklappen-Öffnungsgrad den Drossenklappen-Öffnungsgrad steuert, und wobei
die Steuereinrichtung die Einrichtung (70) zur Steuerung des Drosselklappen-Öffnungsgrads so steuert, daß das Umwandlungsverhältnis vom Gaspedal-Niederdrückwinkel in den Drosselklappen-Öffnungsgrad entsprechend der Vorliebe des Fahrers mit dem behutsamen, normalen und sportlichen Typ in dieser Reihenfolge ansteigt.

28. Vorrichtung nach Anspruch 17, wobei die Unterscheidungseinrichtung (10) auf der Grundlage der Ausgangssignale der ersten und zweiten Sensoren eine Übergangsbedingung erkennt und auf der Grundlage der Ausgangssignale der ersten und zweiten Sensoren während der Übergangsbedingung die Vorlieben des Fahrers unterscheidet.

29. Vorrichtung nach Anspruch 28, wobei die Unterscheidungseinrichtung (10) einen Fahr-Start als Übergangsbedingung erkennt, auf der Grundlage des Ausgangssignals eines GaspedalNiederdrück-Positionssensors als erstem Sensor ein Gaspedal-Niederdrück-Positionsänderungsverhältnis berechnet und auf der Grundlage des Niederdrück-Positionsänderungsverhältnisses beim Fahr-Start die Vorlieben des Fahrers unterscheidet.

30. Vorrichtung nach Anspruch 29, wobei die Unterscheidungseinrichtung (10) das Gaspedal-Niederdrück-

24

EP 0 304 089 B1

Änderungsverhältnis in die Typen groß, mittel und klein einteilt und die Vorlieben des Fahrers als den sportlichen, den normalen und den behutsamen Typ erkennt, wenn das Änderungsverhältnis entsprechenderweise groß, mittel oder klein ist.

31. Vorrichtung nach Anspruch 3, wobei die Unterscheidungseinrichtung (10) die Absicht des Fahrers entsprechend der Fahr-Umgebungen des Fahrzeugs und der Vorlieben des Fahrers in Bezug auf die Fahrweise in eine Vielzahl von Typen einteilt und entsprechend der Ausgangssignale der ersten und zweiten Sensoren unterscheidet, zu welchem Typ die Absicht des Fahrers gehört.

32. Vorrichtung nach Anspruch 31, wobei die Unterscheidungseinrichtung (10) die Fahr-Umgebungen in Landstraße verstopfte Straße und andere Fahr-Umgebungen einteilt und weiterhin die anderen Fahr-Umgebungen in die Vorlieben des Fahrers entsprechend dem sportlichen, dem normalen und dem behutsamen Typ einteilt.

33. Vorrichtung nach Anspruch 32, wobei die zweiten Sensoren einen Fahrzeug-Geschwindigkeitssensor (12) zum Feststellen der Fahrzeuggeschwindigkeit, einen Motordrehzahl-Sensor (9) zum Feststellen der Motordrehzahl und einen Drosselklappen-Positionssensor (14) zum Feststellen des Öffnungsgrads der Drosselklappe aufweisen, und wobei
die Unterscheidungseinrichtung entsprechend den Ausgangssignalen des Fahrzeug-Geschwindigkeitssensors, des Motordrehzahl-Sensors und des Drosselklappen-Positionssensors unterscheidet, zu welchem Typ die Fahr-Umgebung gehört.

34. Vorrichtung nach Anspruch 33, wobei die Unterscheidungseinrichtung (10) unter Verwendung des Ausgangssignals des Motordrehzahl-Sensors ein Motordrehzahl-Änderungsverhältnis und unter Verwendung des Ausgangssignals des Drosselklappen-Positionssensors ein Drosselklappen-Öffnungsgrad-Änderungsverhältnis berechnet und die erhaltene Fahrzeuggeschwindigkeit, das Motordrehzahl-Änderungsverhältnis und das Drosselklappen-Öffnungsgrad-Änderungsverhältnis in die Typen groß, mittel und klein einteilt, und wobei
die Unterscheidungseinrichtung die Fahr-Umgebung, wenn die Fahrzeuggeschwindigkeit groß ist, als Landstraße und, wenn die Fahrzeuggeschwindigkeit gering und das Motordrehzahl-Änderungsverhältnisklein ist, als verstopfte Straße erkennt, und wobei
die Unterscheidungseinrichtung die Absicht des Fahrers, wenn das Motordrehzahl-Änderungsverhältnis, der Drosselklappen-Öffnungsgrad und das Drosselklappen-Öffnungsgrad-Änderungsverhältnis groß sind, als sportlich, wenn sie mittelgroß sind, als normal und, wenn sie klein sind, als behutsam erkennt.

35. Vorrichtung nach Anspruch 31, wobei die Unterscheidungseinrichtung (10) umfaßt: eine Einrichtung, die mittels Anwendung von Mitglieds-Funktionen (membership functions) der Fuzzy-Theorie auf die Ausgangssignale der ersten und zweiten Sensoren die Häufigkeit des großen, mittleren und kleinen Typs für jeden der Ausgangssignalwerte berechnet;
eine Einrichtung, die die Auftretungswahrscheinlichkeit für jede Fahrumgebung und jede Vorliebe des Fahrers ermittelt, indem eine Matrixumwandlungsberechnung von der Häufigkeit des großen, mittleren und kleinen Typs für jedes der Ausgangssignale in die Fahr-Umgebungen und die Vorlieben des Fahrers durchgeführt wird; und
eine Einrichtung, die eine objektive Fahr-Umgebung und eine objektive Vorliebe des Fahrers erkennt, die unter den Fahr-Umgebungen und den Vorlieben des Fahrers jeweils die größte Auftretungswahrscheinlichkeit aufweisen.

36. Vorrichtung nach Anspruch 32, wobei eines der Vielzahl von Betätigungsgliedern ein Kraftstoff-Einspritzventil (14) ist und wobei
die Steuereinrichtung, wenn die Fahr-Umgebung eine verstopfte Straße oder die Vorliebe des Fahrers der behutsame Typ ist, ein erstes Luft/Kraftstoff-Mischungsverhältnis, wenn die Vorliebe des Fahrers der normale Typ ist, ein zweites Luft/Kraftstoff-Mischungsverhältnis und, wenn die Fahr-Umgebung eine Landstraße oder die Vorliebe des Fahrers der sportliche Typ ist, ein drittes Luft/Kraftstoff-Mischungsverhältnis festlegt und das Kraftstoff-Einspritzventil so steuert, daß die Mischungsverhältnisse entsprechenderweise mit dem ersten, dem zweiten und dem dritten Verhältnis in dieser Reihenfolge zunehmen.

25

**37.** Vorrichtung nach Anspruch 32, wobei eines der Vielzahl von Betätigungsgliedern eine Zündkerze (15) ist, und wobei

die Steuereinrichtung, wenn die Fahr-Umgebung eine verstopfte Straße oder die Vorliebe des Fahrers der behutsame Typ ist, einen ersten Zündzeitpunkt, wenn die Vorliebe des Fahrers der normale Typ ist, einen zweiten Zündzeitpunkt und, wenn die Fahr-Umgebung eine Landstraße oder die Vorliebe des Fahrers der sportliche Typ ist, einen dritten Zündzeitpunkt festlegt und die Zündkerze so steuert, daß die Zündzeitpunkte entsprechenderweise mit dem ersten, dem zweiten und dem dritten Zündzeitpunkt in dieser Reihenfolge vorgehen.

**38.** Vorrichtung nach Anspruch 32, wobei eines der Vielzahl von Betätigungsgliedern eine Einrichtung (17, 18, 19, 61, 63, 66) ist, die die Gegenkraft des Gaspedals einstellt, und wobei

die Steuereinrichtung, wenn die Fahr-Umgebung eine verstopfte Straße oder die Vorliebe des Fahrers der behutsame Typ ist, eine erste Gegenkraft, wenn die Vorliebe des Fahrers der normale Typ ist, eine zweite Gegenkraft und, wenn die Fahr-Umgebung eine Landstraße oder die Vorliebe des Fahrers der sportliche Typ ist, eine dritte Gegenkraft festlegt und die Einrichtung zur Einstellung der Gegenkraft so steuert, daß sich die Gaspedal-Gegenkraft entsprechenderweise mit der ersten, der zweiten und der dritten Gegenkraft in dieser Reihenfolge reduziert.

**39.** Vorrichtung nach Anspruch 32, wobei eines der Vielzahl von Betätigungsgliedern eine Einrichtung (70) ist, die den Drosselklappen-Öffnungsgrad mittels einer Umwandlung des Niederdrück-Winkels des Gaspedals in den Drosselklappen-Öffnungsgrad steuert und wobei

die genannte Steuereinrichtung dann, wenn die Fahr-Umgebung eine verstopfte Straße oder die Vorliebe des Fahrers der behutsame Typ ist, ein erstes Umwandlungsverhältnis des Gaspedal-Niederdrückwinkels in den Drosselklappen-Öffnungsgrad, wenn die Vorliebe des Fahrers der normale Typ ist, ein zweites Umwandlungsverhältnis und, wenn die Fahr-Umgebung eine Landstraße oder die Vorliebe des Fahrers der sportliche Typ ist, ein drittes Umwandlungsverhältnis festlegt und die Einrichtung (70) zur Steuerung des Drosselklappen-Öffnungsgrades so steuert, daß die Umwandlungsverhältnisse entsprechenderweise mit dem ersten, dem zweiten und dem dritten Umwandlungsverhältnis in dieser Reihenfolge relativ zueinander zunehmen.

**40.** Vorrichtung nach Anspruch 3, wobei die Unterscheidungseinrichtung (10) die Absicht des Fahrers entsprechend der Fahr-Tätigkeit des Fahrers bei Beschleunigungsperioden in eine Vielzahl von charakteristischen Beschleunigungsmustern einteilt und auf der Grundlage der Ausgangssignale der ersten und zweiten Sensoren unterscheidet, zu welchem charakteristischen Beschleunigungsmuster die Absicht des Fahrers gehört, und wobei

die Steuereinrichtung einen Beschleunigungsraten-Steuermechanismus beinhaltet und den Koeffizienten des Beschleunigungsraten-Steuermechanismus entsprechend dem erkannten charakteristischen Beschleunigungsmuster wechselt.

**41.** Vorrichtung nach einem der vorgehenden Ansprüche, wobei die Unterscheidungseinrichtung (10) die genannte Häufigkeit über eine vorbestimmte Bewertungszeit berechnet.

**Revendications**

**1.** Dispositif électronique de commande du moteur d'un véhicule, comprenant

une pluralité de premiers capteurs (1-8) détectant l'action d'un conducteur du véhicule;

une pluralité de seconds capteurs (9,12,13) détectant les conditions de fonctionnement du véhicule et du moteur;

une pluralité d'actionneurs commandant le moteur;

et des moyens (10) commandant le moteur par réglage des actionneurs en réponse à des signaux desdits capteurs (1-8 et 9,12,13),

lesdits moyens de commande (10) comprenant des moyens discriminant l'intention du conducteur sur la manière de conduire le véhicule sur la base des signaux de sortie desdits premiers et seconds capteurs (1-8 et 9,12,13) au moyen du calcul de la fréquence d'apparition, à laquelle le signal de sortie d'un capteur (1-8 et 9,12,13) se situe dans des gammes prédéterminées ("faible", "moyenne", "élevée"), et

lesdits moyens de commande (10) modifiant les signaux de commande pour lesdits actionneurs en fonction de ladite fréquence calculée.

2.  Dispositif de commande électronique de moteur selon la revendication 1, dans lequel lesdits moyens discriminateurs (10) classent les intentions du conducteur en une pluralité de types en fonction des environnements de conduite du véhicule et/ou de la préférence du conducteur du point de vue du type de conduite possible, et discriminent de quel type est l'intention du conducteur, en fonction des signaux de sortie desdits premiers et seconds capteurs.

3.  Dispositif électronique de commande de moteur selon la revendication 1, dans lequel lesdits moyens discriminateurs mesurent les signaux de sortie délivrés par lesdits premiers et seconds capteurs, plusieurs fois pendant plusieurs cycles du moteur et discriminent le type dont fait partie l'intention du conducteur, en fonction desdites valeurs mesurées.

4.  Dispositif électronique de commande de moteur selon la revendication 3, dans lequel lesdits moyens discriminateurs (10) classent les intentions du conducteur en rapport avec des environnements de conduite du véhicule, à savoir une route encombrée, une rue en agglomération, une rue de banlieue, une route de montagne et une autoroute, et discriminent le type auquel appartient l'environnement de conduite du véhicule, en fonction des signaux délivrés par lesdits premiers et seconds capteurs.

5.  Dispositif électronique de commande de moteur selon la revendication 4, dans lequel lesdits seconds capteurs comprennent un capteur (12) de la vitesse du véhicule pour détecter la vitesse du véhicule, un capteur (9) de la vitesse du moteur pour détecter la vitesse du moteur, et un capteur de la position du papillon des gaz pour détecter le degré d'ouverture du papillon des gaz (7), et dans lequel
    lesdits moyens de discrimination discriminent le type auquel appartient l'environnement de conduite d'un véhicule, en fonction des signaux de sortie dudit capteur de la vitesse du véhicule, dudit capteur de la vitesse du moteur et dudit capteur de la position de la soupape du papillon des gaz.

6.  Dispositif électronique de commande de moteur selon la revendication 5, dans lequel lesdits moyens discriminateurs (10) calculent un taux de variation de la vitesse du moteur en utilisant le signal de sortie délivré par ledit capteur de la vitesse du moteur, calculent en outre le taux de variation du degré d'ouverture du papillon des gaz en utilisant le signal de sortie délivré par ledit capteur de la position du papillon des gaz, et classent la vitesse obtenue du véhicule, le taux de variation obtenu de la vitesse du moteur et le taux de variation obtenu du degré d'ouverture du papillon des gaz comme étant élevé, moyen et faible, et dans lequel
    lesdits moyens de discrimination discriminent l'environnement de conduite comme étant une autoroute, si la vitesse du véhicule est élevée, comme une route encombrée, si la vitesse du véhicule est faible et que l'accélération du moteur est faible, comme une route de montagne, si le taux de variation du degré d'ouverture du papillon des gaz et le taux de variation de la vitesse du moteur sont élevés et en tant que rue en agglomération si la vitesse du véhicule et le taux de variation de la vitesse du moteur prennent des valeurs intermédiaires.

7.  Dispositif électronique de commande de moteur selon la revendication 4, selon lequel lesdits moyens discriminateurs (10) comprennent :
    une unité pour calculer les fréquences d'apparition des types fréquence élevée, moyenne et faible de chaque valeur de signal de sortie au moyen de l'application de fonctions de relations de la théorie Fuzzy aux signaux de sortie desdits premier et second capteurs;
    une unité fournissant la probabilité d'apparition de chaque environnement de conduite moyennant l'exécution d'un calcul matriciel de conversion des fréquences d'apparition des types de fréquence élevée, moyenne et faible de chaque signal de sortie en les environnements de conduite; et
    une unité discriminant un environnement objectif de conduite, qui possède une probabilité d'apparition maximale parmi les environnements de conduite.

8.  Dispositif électronique de commande de moteur selon la revendication 4, dans lequel lesdits premiers capteurs comprennent un capteur de changement de vitesse (8) pour détecter un changement de vitesse exécuté au moyen d'un levier de changement de vitesse, un capteur de freinage (5) pour détecter l'enfoncement d'une pédale de frein, un capteur de pédale d'accélérateur (4) pour détecter l'enfoncement de la pédale d'accélérateur, et un capteur de braquage (6) pour détecter un mouvement de braquage, et lesdits seconds capteurs comprennent un capteur (12) de la vitesse du véhicule servant à détecter la vitesse du véhicule, et dans lequel
    lesdits moyens discriminateurs classent la fréquence du changement de vitesse, la fréquence du braquage, la fréquence de l'enfoncement de la pédale de frein et la fréquence de l'enfoncement de la pédale d'accélérateur respectivement selon des types de fréquence élevée, moyenne et faible, en fonction des signaux de sortie délivrés par lesdits premiers et seconds capteurs, classent la vitesse du véhicule en un type de vitesse élevée, moyenne et faible, et discriminent les environnements de conduite sur la base du résultat de la classification.

9. Dispositif électronique de commande de moteur selon la revendication 8, dans lequel lesdits moyens discriminateurs (10) discriminent l'environnement de conduite comme étant un déplacement sur une autoroute si la vitesse du véhicule est élevée et que la fréquence du changement de vitesse est élevée, et comme un déplacement sur une route encombrée si la vitesse du véhicule est faible et que la fréquence d'enfoncement de la pédale de frein est élevée.

10. Dispositif électronique de commande de moteur selon la revendication 8, dans lequel lesdits moyens discriminateurs (10) discriminent l'environnement de conduite comme étant un déplacement sur route de banlieue si la vitesse du véhicule est maintenue à proximité d'une vitesse limitée et que la fréquence et la gamme du mouvement de braquage sont faibles.

11. Dispositif électronique de commande de moteur selon la revendication 8, dans lequel lesdits moyens discriminateurs (10) discriminent l'environnement de conduite comme étant un déplacement en rue en agglomération si les fréquences du mouvement de braquage et de l'actionnement du frein sont élevées.

12. Dispositif électronique de commande de moteur selon la revendication 8, dans lequel lesdits moyens discriminateurs (10) discriminent l'environnement de conduite comme étant un déplacement sur une route de montagne si les fréquences du mouvement de braquage et de la variation d'enfoncement entre la pédale de frein et la pédale d'accélérateur sont élevées.

13. Dispositif électronique de commande de moteur selon la revendication 4, dans lequel l'un de ladite pluralité d'actionneurs est une soupape d'injection de carburant (14), et dans lequel

lesdits moyens de commande commandent ladite soupape d'injection de carburant de manière que le rapport d'une quantité de carburant injectée à une quantité d'air aspirée augmente en rapport avec les environnements respectifs de conduite correspondant à une route encombrée, une rue en agglomération, une route de montagne et une autoroute,dans cet ordre.

14. Dispositif électronique de commande de moteur selon la revendication 4, dans lequel l'un de ladite pluralité d'actionneurs est une bougie d'allumage (15), et dans lequel

lesdits moyens de commande commandent ladite bougie d'allumage de telle sorte que les séquences d'allumage avancent en rapport avec les environnements respectifs de conduite correspondant à une route encombrée, une rue en agglomération, une route de montagne et une autoroute, dans cet ordre.

15. Dispositif électronique de commande de moteur selon la revendication 4, dans lequel l'un de ladite pluralité d'actionneurs est un moyen (17,18,19,61,63,66) réglant une force de répulsion d'une pédale d'accélérateur, et dans lequel

lesdits moyens de commande commandent la force de répulsion de telle sorte que les forces de répulsion diminuent en rapport avec les environnements respectifs de conduite correspondant à une route encombrée, une rue en agglomération, une route de montagne et une autoroute, dans cet ordre.

16. Dispositif électronique de commande de moteur selon la revendication 4, dans lequel un de ladite pluralité d'actionneurs est un moyen (70) commandant un degré d'ouverture du papillon des gaz au moyen de la conversion de l'angle d'enfoncement d'une pédale d'accélérateur en le degré d'ouverture du papillon des gaz, et dans lequel

lesdits moyens de commande commandent les moyens (70) de commande du degré d'ouverture du papillon des gaz de telle sorte que les taux de conversion de l'angle d'enfoncement de la pédale d'accélérateur en le degré d'ouverture du papillon des gaz augmentent en rapport avec les environnements respectifs de conduite correspondant à une route encombrée, une rue en agglomération, une route de montagne et une autoroute, dans cet ordre.

17. Dispositif électronique de commande de moteur selon la revendication 3, dans lequel lesdits moyens discriminateurs (10) classent les intentions du conducteur en rapport avec la préférence de ce dernier du point de vue conduite en un type de conduite sportive, normale et en douceur, et discriminent le type auquel va la préférence du conducteur, en fonction des signaux de sortie desdits premiers et seconds capteurs.

18. Dispositif électronique de commande de moteur selon la revendication 17, dans lequel lesdits seconds capteurs comprennent un capteur (9) de la vitesse du moteur servant à détecter la vitesse du moteur, et un capteur de la position du papillon des gaz pour détecter le degré d'ouverture d'un papillon des gaz (7), et dans lequel

lesdits moyens discriminateurs (10) discriminent le type auquel s'apparente la préférence du conducteur, en fonction de signaux de sortie dudit capteur de la vitesse du moteur et dudit capteur de la position du papillon des gaz.

19. Dispositif électronique de commande de moteur selon la revendication 18, dans lequel lesdits moyens discriminateurs 10 calculent un taux de variation de la vitesse du moteur en utilisant le signal de sortie délivré par ledit capteur de la vitesse du moteur, et calculent en outre un taux de variation du degré d'ouverture du papillon des gaz en utilisant le signal de sortie délivré par ledit capteur de la position du papillon des gaz, et classent le taux de variation obtenu de la vitesse du moteur et le taux de variation obtenu de l'ouverture du papillon des gaz comme étant élevé, moyen et faible, et dans lequel

lesdits moyens discriminateurs discriminent l'intention du conducteur comme étant une intention de type de conduite sportive, si le taux de variation de la vitesse du moteur, le degré d'ouverture du papillon des gaz et le taux de variation du degré d'ouverture du papillon des gaz sont élevés, de type de conduite normale, si ces valeurs sont moyennes, et de type de conduite en douceur si ces valeurs sont faibles.

20. Dispositif électronique de commande de moteur selon la revendication 17, dans lequel lesdits moyens discriminateurs (10) comprennent:

une unité calculant les fréquences d'apparition des types élevé, moyen et faible de la valeur de chaque signal de sortie au moyen de l'application de fonctions de relations de la théorie Fuzzy aux signaux de sortie desdits premiers et seconds capteurs;

une unité obtenant la probabililité d'apparition de chaque préférence du conducteur moyennant l'exécution d'un calcul matriciel de conversion des fréquences d'apparition du type fréquence élevée, moyenne et faible de chaque signal de sortie en les préférences du conducteur; et

une unité discriminant une préférence objective du conducteur qui possède la probabilité d'apparition maximale parmi les préférences du conducteur.

21. Dispositif électronique de commande de moteur selon la revendication 17, dans lequel lesdits premiers capteurs comprennent un capteur (4) détectant l'angle d'enfoncement d'une pédale d'accélérateur, et dans lequel

lesdits moyens discriminateurs discriminent les préférences comme étant le type sportif si le conducteur enfonce brusquement la pédale d'accélérateur.

22. Dispositif électronique de commande de moteur selon la revendication 17, dans lequel lesdits premiers capteurs comprennent un capteur (4) détectant la position d'enfoncement de la pédale d'accélérateur, et un capteur (5) détectant la position d'enfoncement de la pédale de frein, et dans lequel

lesdits moyens discriminateurs (10) discriminent les préférences de types de conduite sur la base des enfoncements et des fréquences d'enfoncements des pédales d'accélérateur et de frein.

23. Dispositif électronique de commande de moteur selon la revendication 17, caractérisé en ce que lesdits premiers capteurs comprennent un capteur (4) détectant la position d'enfoncement de la pédale d'accélérateur, un capteur (5) détectant une position d'enfoncement de la pédale de frein, et un capteur (8) détectant la position de changement de vitesse d'un levier de changement de vitesse,

lesdits seconds capteurs comprennent un capteur (12) détectant la vitesse du véhicule, un capteur (9) détectant la vitesse du moteur, et

lesdits moyens de discrimination discriminent les préférences du conducteur sur la base des signaux de sortie délivrés par lesdits premiers et seconds capteurs.

**24.** Dispositif électronique de commande de moteur selon la revendication 17, dans lequel l'un de ladite pluralité d'actionneurs est une soupape d'injection de carburant (14), et dans lequel

lesdits moyens de commande commandent ladite soupape d'injection de carburant de telle sorte que le rapport de la quantité de carburant injectée à la quantité d'air aspirée augmente en rapport avec les préférences respectives du conducteur pour les types de conduites en douceur, normale et sportive, dans cet ordre.

**25.** Dispositif électronique de commande de moteur selon la revendication 17, dans lequel l'un de ladite pluralité d'actionneurs est une bougie d'allumage (15), et dans lequel

lesdits moyens de commande commandent ladite bougie d'allumage de telle sorte que les séquences d'allumage avancent en rapport avec lesdites préférences respectives du conducteur pour les types de conduites en douceur, normale et sportive, dans cet ordre.

**26.** Dispositif électronique de commande de moteur selon la revendication 17, dans lequel l'un de ladite pluralité d'actionneurs est un moyen (17,18,19,61,63,64) réglant une force de répulsion de la pédale d'accélérateur, et dans lequel

lesdits moyens de commande commandent lesdits moyens de réglage de la force de répulsion de manière que les forces de répulsion diminuent en rapport avec les préférences respectives du conducteur pour la conduite en douceur, normale et sportive, dans cet ordre.

**27.** Dispositif électronique de commande de moteur selon la revendication 17, dans lequel l'un de ladite pluralité d'actionneurs est un moyen (70) commandant un degré d'ouverture du papillon des gaz au moyen de la conversion de l'angle d'enfoncement de la pédale d'accélérateur en le degré d'ouverture du papillon des gaz, et dans lequel

lesdits moyens de commande commandent lesdits moyens (70) de commande du degré d'ouverture du papillon des gaz de telle sorte que le taux de conversion de l'angle d'enfoncement de la pédale d'accélérateur en le degré d'ouverture du papillon des gaz augmente en rapport avec les préférences respectives du conducteur pour les types de conduites en douceur, normale et sportive, dans cet ordre.

**28.** Dispositif électronique de commande de moteur selon la revendication 17, dans lequel lesdits moyens discriminateurs (10) détectent un état de transition de la condition de conduite sur la base des signaux de sortie délivrés par lesdits premiers et seconds capteurs, et discriminent les préférences du conducteur sur la base des signaux de sortie délivrés par lesdits premiers et seconds capteurs pendant l'état de transition.

**29.** Dispositif électronique de commande de moteur selon la revendication 28, dans lequel lesdits moyens discriminateurs (10) détectent un démarrage de la conduite en tant qu'état de transition, calculent le taux de variation de la position d'enfoncement de la pédale d'accélérateur sur la base d'un signal de sortie d'un capteur de la position d'enfoncement de la pédale d'accélérateur constituant un premier capteur, et discriminent les préférences du conducteur sur la base du taux de variation de la position d'enfoncement au démarrage.

**30.** Dispositif électronique de commande de moteur selon la revendication 29, dans lequel lesdits moyens discriminateurs (10) classent le taux de variation de l'enfoncement de la pédale d'accélérateur en des types élevé, moyen et faible, et discriminent les préférences du conducteur pour les types de conduite sportive, normale et en douceur, si le taux de variation est respectivement élevé, moyen et faible.

**31.** Dispositif électronique de commande de moteur selon la revendication 3, dans lequel lesdits moyens discriminateurs (10) classent l'intention du conducteur en une pluralité de types en fonction des environnements de conduite du véhicule et des préférences du conducteur pour la conduite, et discriminent le type d'intention du conducteur, en fonction des signaux de sortie délivrés par lesdits premiers et seconds capteurs.

**32.** Dispositif électronique de commande de moteur selon la revendication 31, dans lequel lesdits moyens discriminateurs (10) classent les environnements de conduite sur autoroute, sur route encombrée et dans d'autres environnements de conduite, et en outre classent les autres environnements de conduite en les préférences du conducteur pour les types de conduite sportive, normale et en douceur.

**33.** Dispositif électronique de commande de moteur selon la revendication 29, dans lequel lesdits seconds capteurs comprennent un capteur (12) de la vitesse du véhicule pour détecter une vitesse du véhicule, un capteur (9) de la vitesse du moteur, pour détecter la vitesse du moteur, et un capteur (4) de la position du papillon des gaz pour détecter le degré d'ouverture du papillon des gaz, et dans lequel

lesdits moyens discriminateurs (10) discriminent le type auquel s'apparente l'environnement de conduite, en fonction des signaux de sortie délivrés par ledit capteur de la vitesse du véhicule, ledit capteur de la vitesse du moteur et ledit capteur de la position du papillon des gaz.

**34.** Dispositif électronique de commande de moteur selon la revendication 33, dans lequel lesdits moyens discriminateurs (10) calculent un taux de variation de la vitesse du moteur en utilisant le signal de sortie délivré par ledit capteur de la vitesse du moteur, calculent en outre un taux de variation du degré d'ouverture du papillon des gaz en utilisant le signal de sortie délivré par ledit capteur de la position du papillon des gaz, et classent la vitesse obtenue du véhicule, le taux de variation obtenu de la vitesse du moteur et le taux de variation obtenu du degré d'ouverture du papillon des gaz comme étant élevé, moyen et faible, et dans lequel

lesdits moyens discriminateurs discriminent l'environnement de conduite comme étant une autoroute, si la vitesse du véhicule est élevée, et une route encombrée si la vitesse du véhicule est faible et si le taux de variation de la vitesse du moteur est faible, et

lesdits moyens discriminateurs discriminent l'intention du conducteur comme étant une conduite sportive si le taux de variation de la vitesse du moteur, le degré d'ouverture du papillon des gaz et le taux de variation du degré d'ouverture du papillon des gaz sont élevés, comme normale si ces valeurs sont moyennes, et comme étant une conduite en douceur si ces valeurs sont faibles.

**35.** Dispositif électronique de commande de moteur selon la revendication 31, dans lequel lesdits moyens discriminateurs (10) comprennent :

une unité calculant les fréquences d'apparition des types élevé, moyen et faible de chaque valeur de signal de sortie au moyen de l'application de fonctions de relation de la théorie Fuzzy aux signaux de sortie desdits premiers et seconds capteurs;

une unité fournissant la probabilité d'apparition de chaque environnement de conduite et de chaque préférence du conducteur au moyen de l'exécution d'un calcul matriciel de conversion des fréquences d'apparition des types élevé, moyen et faible de chaque signal de sortie en les environnements de conduite et en les préférences du conducteur; et

une unité discriminant l'environnement objectif de conduite et une préférence objective du conducteur, qui possède les probabilités maximale d'apparitions respectivement parmi les environnements de conduite ou les préférences du conducteur.

**36.** Dispositif électronique de commande de moteur selon la revendication 32, dans lequel l'un de ladite pluralité d'actionneurs est une soupape d'injection de carburant (14); et dans lequel

lesdits moyens de commande règlent un premier rapport de mélange air/carburant si l'environnement de conduite est la roue encombrée ou si la préférence du conducteur est le type de conduite en douceur, un second rapport du mélange air/carburant si la préférence du conducteur est le type de conduite normale, et un troisième rapport du mélange air/carburant si l'environnement de conduite est l'autoroute ou si la préférence du conducteur est le type de conduite sportive,et commandent la soupape d'injection de carburant de telle sorte que les rapports de mélange augmentent en rapport avec les valeurs respectives des premier, second et troisième rapports de mélange, dans cet ordre.

**37.** Dispositif électronique de commande de moteur selon la revendication 32, dans lequel l'un de ladite pluralité d'actionneurs est une bobine d'allumage (15), et dans lequel

lesdits moyens de commande règlent des premières séquences d'allumage si l'environnement de conduite est une route encombrée ou si la préférence du conducteur est le type de conduite en douceur, des secondes séquences d'allumage si la préférence du conducteur est le type de conduite normale et des troisièmes séquences d'allumage si l'environnement de conduite est une autoroute ou si la préférence du conducteur est le type de conduite sportive, et commandent la bougie d'allumage de manière que les séquences d'allumage avancent en rapport avec les première, seconde et troisième séquences d'allumage, dans cet ordre.

**38.** Dispositif électronique de commande de moteur selon la revendication 32, dans lequel l'un de ladite pluralité d'actionneurs est un moyen (17,18,19,61,63,66) réglant une force de répulsion de la pédale d'accélérateur, et dans lequel

lesdits moyens de commande règlent une première force de répulsion si l'environnement de commande est la route encombrée ou si la préférence du conducteur est le type de conduite en douceur, une seconde force de répulsion si la préférence du conducteur est le type de conduite normale, et une troisième force de répulsion si l'environnement de conduite est une autoroute ou si la préférence du conducteur est le type de conduite sportive, de sorte que la force de répulsion de la pédale d'accélérateur diminue en rapport avec les première, seconde et troisième forces de répulsion, dans cet ordre.

39. Dispositif électronique de commande de moteur selon la revendication 32, dans lequel l'un de ladite pluralité d'actionneurs est un moyen (70) commandant un degré d'ouverture du papillon des gaz au moyen de la conversion de l'angle d'enfoncement d'une pédale d'accélérateur en le degré d'ouverture du papillon des gaz, et dans lequel

lesdits moyens de commande règlent un premier rapport de conversion de l'angle d'enfoncement de la pédale de conversion en le degré d'ouverture du papillon des gaz si l'environnement de conduite est une route encombrée ou si la préférence du conducteur est le type de conduite en douceur, un second rapport de conversion si la préférence du conducteur est le type de conduite normale, et un troisième rapport de conversion si l'environnement de conduite est une nationale ou si la préférence du conducteur est le type de conduite sportive, et commandent lesdits moyens (70) de commande du degré d'ouverture du papillon des gaz de manière que les rapports de conversion augmentent en rapport avec les premier, second et troisième rapports de conversion, dans cet ordre.

40. Dispositif électronique de commande de moteur selon la revendication 3, dans lequel lesdits moyens discriminateurs (10) classent les intentions du conducteur en rapport avec l'action de conduite du conducteur pendant des périodes d'accélération, en une pluralité de diagrammes caractéristiques d'accélération, et discriminent à quel diagramme caractéristique d'accélération est associée l'intention du conducteur, sur la base des signaux de sortie délivrés par lesdits premiers et second capteurs, et dans lequel

lesdits moyens de commande comprennent un mécanisme de commande du taux d'accélération et modifient le coefficient dudit mécanisme de commande du taux d'accélération en fonction du diagramme caractéristique d'accélération discriminé.

41. Dispositif électronique de commande de moteur selon l'une quelconque des revendications précédentes, dans lequel lesdits moyens discriminateurs (10) calculent la fréquence mentionnée précédemment pendant un intervalle de temps d'évaluation prédéterminé.

# FIG. IA

CHARACTERISTIC DRIVINGACTIONS DEPENDENT ON DRIVER'S PREFERENCES & DRIVING ENVIRONMENT

| | DRIVER'S PREFERENCE | | | DRIVING ENVIRONMENT | | | |
|---|---|---|---|---|---|---|---|
| | GENTLE (Ge) | NORMAL (No) | SPORTY (Sp) | CONGESTED (CG) | URBAN STREET (St) | MOUNTAIN ROAD (Mt) | HIGHWAY (Hw) |
| THROTTLE VALVE OPENING DEGREE $\theta$th | ◎ SMALL AS A WHOLE | MIDDLE WITH SLIGHT FLUCTUATION | ◎ LARGE AS A WHOLE | ○ SMALL | MIDDLE AS A WHOLE | LARGE AS A WHOLE | MIDDLE AS A WHOLE |
| $\Delta\theta$th | ◎ SMALL | MIDDLE | ◎ LARGE | ○ SMALL | LARGE | LARGE | SMALL |
| VEHICLE SPEED v | | | | ◎ LOW | MIDDLE | LOW ~ MIDDLE | ◎ HIGH |
| ENGINE SPEED N | LOW | MIDDLE | HIGH | LOW | LOW ~ MIDDLE | MIDDLE ~ HIGH | MIDDLE ~ HIGH |
| $G, (\dfrac{dN}{dt})$ | ○ SMALL | ○ MIDDLE | ○ LARGE | SMALL | MIDDLE | LARGE | SMALL |
| GEAR POSITION (GP) | HIGH SPEED SIDE | MIDDLE SPEED SIDE | LOW SPEED SIDE | LOW SPEED ○ | MIDDLE SPEED SIDE | LOW SPEED SIDE | HIGH SPEED ○ |

EP 0 304 089 B1

# FIG. IB

| | | DRIVER'S PREFERENCE | | | DRIVING ENVIRONMENT | | | |
|---|---|---|---|---|---|---|---|---|
| | | GENTLE (Ge) | NORMAL (No) | SPORTY (Sp) | CONGESTED (CG) | URBAN STREET (St) | MOUNTAIN ROAD (Mt) | HIGHWAY (Hw) |
| SHIFT ACTION | FREQUENCY | HIGH | LOW | MIDDLE | HIGH | MIDDLE | HIGH | O LOW |
| | TIMING | QUICK SHIFT-UP SLOW SHIFT-DOWN | MIDDLE | SLOW SHIFT-UP QUICK SHIFT-DOWN | | | SLOW SHIFT-UP QUICK SHIFT-DOWN | |
| | TIME MAINTAINED AT NEUTRAL POSITION | LONG | MIDDLE | SHORT | | | SHORT | |
| SPEED FLUCTUATION | | SMALL | MIDDLE | LARGE | LARGE | MIDDLE | LARGE | ◎ SMALL |
| STEERING ROTARY SPEED | | LOW | MIDDLE | HIGH | LOW | | O HIGH | O LOW |
| BRAKE FREQUENCY | | LOW | MIDDLE | HIGH | O HIGH | | O HIGH | O LOW |

◎ VERY LIKELY

O SLIGHTLY LIKELY

EP 0 304 089 B1

FIG. 2

VEHICLE SPEED SENSOR 12

24 ROM
22 CPU
26 RAM
10

28 AMP
30 AMP

20 I/O CIRCUIT

PS

$\theta br$ 5

$\theta th$ 4

2

1

GP

Qa

$\theta st$

3

6

7

8

13

14

15

9

34

32

EP 0 304 089 B1

EP 0 304 089 B1

# FIG. 3

```
┌─────────────────┐
│     TIMER       │──── 41
│  INTERRUPTION   │
└────────┬────────┘
         │
┌────────┴────────┐
│   TO  MEASURE   │──── 42
└────────┬────────┘
         │
┌────────┴────────┐
│ TO DIFFERENTIATE│──── 43
└────────┬────────┘
         │
┌────────┴────────────┐
│   TO  CALCULATE     │──── 44
│ MEMBERSHIP FUNCTION │
└────────┬────────────┘
         │
┌────────┴────────────┐
│ TO ACCUMULATE VALUES│──── 45
│ OF MEMBERSHIP FUNCTION│
└────────┬────────────┘
         │           46
    ◇────┴────◇    NO
   │  l ≧ lx  │─────────────┐
    ◇─────────◇             │
         │ YES         ┌────┴────────┐
┌────────┴────────────┐│  l = l + 1  │──── 47
│  FREQUENCY (Fki)    ││             │
│=ACCUMULATED VALUE/lx│ └────┬────────┘
└────────┬────────────┘      │
      49 │              ┌────┴────┐
┌────────┴────────┐     │  E N D  │──── 48
│     l = 0       │──50 └─────────┘
│ ACCUMULATED VALUE│
│       =0        │
└────────┬────────┘
         │
┌────────┴────────────┐
│ TO ESTIMATE DRIVING │
│ CONDITIONS          │
│ (DRIVING ENVIRONMENT)│──── 51
│                     │
│  Dji = ∑ Mjk · Fki  │
│        k            │
└────────┬────────────┘
         │
┌────────┴────────────┐
│TO DETERMINE DRIVING │
│ CONDITION VARIABLE  │──── 52
│                     │
│  Dj = max ∑ Dji     │
│        j  i         │
└────────┬────────────┘
         │
┌────────┴────────────┐
│ TO  CHANGE  DRIVING │──── 53
│ CHARACTERISTICS     │
└────────┬────────────┘
         │
    ┌────┴────┐
    │  E N D  │──── 54
    └─────────┘
```

$$FREQUENCY\ (Fki) = ACCUMULATED\ VALUE / lx$$

$$Dji = \sum_{k} Mjk \cdot Fki$$

$$Dj = \max_{j} \sum_{i} Dji$$

36

# FIG. 4

EP 0 304 089 B1

EP 0 304 089 B1

FIG. 5A

FIG. 5B

FIG. 5C

FIG. 5D

FIG. 5E

FIG. 5F

38

# FIG. 6

20

I/O CIRCUIT

10

4

θth

7

18

21b

1

21a

21

19

17

ACCELERATOR PEDAL REPULSION FORCE CONTROL UNIT

# FIG. 8

61a

1

61

62

65

66

63

# FIG. 7

MEASURED VARIABLE · MEASURED VALUE · MEMBERSHIP FUNCTION · FREQUENCY DATA (Fki) · WEIGHT OF CONV. MATRIX (Mjk) · ESTIMATION OF DRIVING COND.

VEHICLE SPEED V

dN/dt

$\theta$ th

$\Delta\theta$ th

GEAR POSITION

STEERING SPEED

EP 0 304 089 B1

# FIG. 9

# FIG. IOA

SPARK TIMING
72 CONTROL UNIT

FUEL
INJECTION
CONTROL  IGNITION
71 UNIT

DEPRESSION
FORCE     +

$\theta$th

Ti

ENGINE

N

−

REPULSION FORCE

17 REPULSION FORCE
CONTROL UNIT

# FIG. IOB

SPARK TIMING
CONTROL
UNIT

72

TARGET
ACCELERATION RATE
SETTING UNIT
73

74

IGNITION

71

$\theta$ac

Go

TARGET ACCEL-
ERATION RATE
TRACKING CON-
TROL UNIT

$\theta$th

FUEL INJEC-
TION CONTROL
UNIT

Ti

ENGINE

N

# FIG. II

| MEASURED VARIABLE | MEASURED VALUE | MEMBERSHIP FUNCTION | FREQUENCY DATA (Fki) | WEIGHT OF CONV. MATRIX (Mjk) | ESTIMATION OF DRIVING COND. |

VEHICLE SPEED V

dN/dt

θ th

Δθ th

GEAR

STEERING SPEED

EP 0 304 089 B1

## FIG. 12

TIMER
INTERRUPTION 41

TO MEASURE 42

TO JUDGE
DRIVING CONDITION 55

OUTSIDE RANGE

SET INITIAL VALUES

WITHIN RANGE

END

TO DIFFERENTIATE 43

$l = 0$
ACCUMULATED VALUE
$= 0$ 56

TO CALCULATE
MEMBERSHIP FUNCTION 44

END

TO ACCUMULATE VALUES
OF MEMBERSHIP FUNCTION 45

$l = lx$ 46

NO

YES

$l = l + 1$ 47

FREQUENCY (Fki)
= ACCUMULATED VALUE / lx 49

END 48

TO ESTIMATE DRIVING
CONDITIONS

$Dji = Mjk \cdot Fki$ 51

TO DETERMINE DRIVING
CONDITION VARIABLE
$Dj = \max Dji$ 52

TO CHANGE DRIVING
CHARACTERISTICS 53

END 54

# FIG. 13

TIMER INTERRUPTION — 41

TO MEASURE $v$, $\theta ac$ — 42

57
$v > 0$ — NO

YES

58
$v \leq Vm$ — NO

YES

56
$l = 0$
ACCUMULATED VALUE $= 0$

END

END

$\Delta\theta ac(t_i) = \theta ac(t_i) - \theta ac(t_{i-1})$ — 43

TO BLOCK 44

# FIG. 14A

SPORTY
(Sp)

NORMAL
(No)

GENTLE
(Ge)

$\theta ac$

ACCELERATOR PEDAL ANGLE

o   $t_1$   $t_2$   $tp$   $ti-1$   $ti$   TIME

# FIG. 14B

MEMBERSHIP FUNCTION

S   M   L

1

GENTLE
(Ge)

NORMAL
(No)

SPORTY
(Sp)

0

$\theta ac(ti) - \theta ac(ti-1)$

46

# FIG. 14C

# FIG. 14D

FIG. 15A

FIG. 15B

FIG. 15C

FIG. 15D

FIG. 15E

# FIG. 16

TARGET ACCELERATION RATE SETTING UNIT
80

θac → Gt + ΔG → THROTTLE VALVE CONTROL UNIT 84 → θth → FUEL INJECTION CONTROL UNIT 71 → Ti → ENGINE → N

SPARK TIMING CONTROL UNIT 72

Ga ← ACCELERATION RATE CALCULATION UNIT 82

EP 0 304 089 B1